# EUROPEAN PATENT APPLICATION

(11) **EP 4 545 827 A1**
(43) Date of publication of application: **30.04.2025**
(21) Application number: 23858944.4
(22) Date of filing: 10.07.2023
(51) Int. Cl.: F16K 11/22, F16K 31/02, A47C 27/10

(54) **AIR PRESSURE ADJUSTMENT DEVICE, AIR PRESSURE MASSAGE INSTRUMENT, AND CONTROL METHOD FOR AIR PRESSURE MASSAGE INSTRUMENT**

(30) Priority: 31.08.2022 CN 202211054271; 31.08.2022 CN 202211053707
(71) Applicant: Sichuan Qianli-Beoka Medical Technology Inc., Chengdu, Sichuan 610052 (CN)
(72) Inventor: YANG, Jichao, Chengdu, Sichuan 610052 (CN); ZENG, Wei, Chengdu, Sichuan 610052 (CN); ZHANG, Wen, Chengdu, Sichuan 610052 (CN)
(74) Representative: Gulde & Partner
(86) International application number: PCT/CN2023/106622
(87) International publication number: WO 2024/045906

(57) **Abstract**

The present invention discloses an air pressure adjusting device, an air pressure massager thereof and a method for controlling the air pressure massager. The air pressure adjusting device includes a base, where an air intake channel and a plurality of air chambers are arranged in the base, each air chamber is communicated with an openable and closable air intake chamber, an airbag connecting pipe is communicated with the air intake chamber, and the air chamber not communicated with the air intake chamber is communicated with the air intake channel; a check valve is arranged at the connection between each air intake chamber and the air intake channel, and the check valve is opened in the direction from the air intake chamber to the air intake channel; and the air intake channel is also communicated with the openable and closable air intake port of the air intake channel and a first openable and closable air exhaust channel. According to the present invention, the airbag connected with the airbag connecting pipe on the air pressure adjusting device is subjected to pressure maintaining by the air pressure adjusting device, and the air can be inflated into the air intake channel of the air pressure adjusting device, then a pressure difference is obtained between the inner and outer sides of the check valve, the air intake chamber communicated with the airbag connecting pipe is closed, and the air in the airbag does not flow back due to the inability of flow, thus maintaining the pressure of the airbag.

## Description

### Technical Field

The present invention relates to the technical field of massage equipment, and in particular, to an air pressure adjusting device, an air pressure massager thereof and a method for controlling the air pressure massager.

### Background

Air pressure massager is a device that massages human limbs and muscular tissues by inflating and deflating airbags. Generally, the air pressure massager is equipped with a plurality of airbags inflated by an air pump. Solenoid valves are arranged among airbags, inflation channels and deflation channels to control the opening and closing of the air channel, and the opening and closing of the solenoid valves are controlled by the control system of the air pressure massager.

When a plurality of airbags are gradually inflated by the existing air pressure massager, high-pressure air in the inflated airbag will flow back into the airbag that is being inflated, so that cross air is formed between the inflated airbag and the airbag that is being inflated. The formation of the cross air phenomenon will not only reduce an air pressure in the inflated airbag, but also produce noise. In addition, due to the decrease of the air pressure in the inflated airbag, the control difficulty of airbag inflation and deflation will be improved and the control accuracy of airbag inflation and deflation will be reduced. Obviously, the cross air phenomenon of the air pressure massager will adversely affect the massage work of the air pressure massager, which will eventually affect the massage experience of users. Moreover, the airbag needs to be inflated from the state without pre-inflation to the set pressure every time, and the inflation time is long, which leads to the reduction of massage cycles and serious power consumption within a same time.

### Summary

The present invention aims to solve the problems of air cross between airbags of an air pressure massager and long airbag inflation time in the prior art.

In order to solve the above technical problems, the technical solution adopted by the present invention is that an air pressure adjusting device is provided and includes a base, wherein a pressure maintaining channel and a plurality of three-way chambers are arranged in the base, each of the three-way chambers is communicated with an openable and closable diversion chamber, and the diversion chamber is communicated with an airbag connecting pipe; ports of the three-way chambers that are not communicated with the diversion chamber are communicated with the pressure maintaining channel; a check valve is arranged at the connection between the three-way chambers and the pressure maintaining channel and is opened in the direction from the three-way chambers to the pressure maintaining channel; and the pressure maintaining channel is further communicated with an air intake port of the openable and closable pressure maintaining channel and a first openable and closable air exhaust channel.

Further, a first exhaust solenoid valve and an air chamber solenoid valve in one-to-one correspondence to the three-way chambers are arranged on the base; the first exhaust solenoid valve is configured to control opening and closing of the first exhaust channel; and the air chamber solenoid valve is configured to control opening and closing of the diversion chamber communicated with the corresponding three-way chamber.

Further, the base includes an intermediate frame and a lower base, the plurality of three-way chambers are spaced apart inside the lower base in the length direction of the lower base, a plurality of diversion chambers are spaced apart inside the intermediate frame in the length direction of the intermediate frame, and the diversion chambers are located above the corresponding three-way chambers; the air chamber solenoid valve is secured to the bottom of the lower base; the piston end of the air chamber solenoid valve passes through the corresponding three-way chambers and extends into the diversion chambers located above the three-way chambers; the piston end of the air chamber solenoid valve is in sealing fit with all connections of the diversion chambers; the intermediate frame is detachably connected to the top of the lower base; and the intermediate frame is provided with an intake and exhaust channel communicated between the diversion chamber and the airbag connecting pipe.

Further, the lower base is further internally provided with an exhaust channel in one-to-one correspondence to the three-way chambers, and the exhaust channel is communicated between the pressure maintaining channel and the corresponding three-way chambers; the check valve is arranged at the connection between the air exhaust channel and the pressure maintaining channel, and the check valve is opened in the direction from the air exhaust channel to the pressure maintaining channel.

Further, the airbag connecting pipe is a conical pipe vertically arranged on the intermediate frame, and the outer diameter of one end of the airbag connecting pipe communicated with the intake and exhaust channel is larger than that of the other end thereof.

Further, the base further includes a check valve fixing plate, the check valve fixing plate is detachably connected to the side surface of the lower base, the check valve fixing plate is provided with a first mounting half chamber in one-to-one correspondence to a check valve, the lower base is provided with a second mounting half chamber in one-to-one correspondence to the check valve, the second mounting half chamber is communicated with the corresponding three-way chambers, and the first mounting half chamber and the second mounting half chamber are butted to form a chamber for accommodating the corresponding check valve.

Further, the base further includes a sealing side cover plate, the check valve fixing plate is provided with a pressure maintaining channel groove extending along the length direction of the check valve fixing plate, the pressure maintaining channel groove is communicated with each first mounting half chamber, the sealing side cover plate is detachably connected to the surface of the check valve fixing plate not connected with the lower base, and the sealing side cover plate covers the pressure maintaining channel groove and is in sealing fit with the pressure maintaining groove to form the pressure maintaining channel.

Further, the base is further provided with an air channel and a second openable and closable exhaust chamber; the air channel is provided with an air intake port of the air channel and communicated with the diversion chamber of each three-way chamber; the second exhaust chamber is communicated with the air channel; and a second exhaust channel is communicated with the second exhaust chamber at the place not communicated with the air channel.

Further, a second exhaust solenoid valve is further provided and is configured to control opening and closing of the second exhaust chamber; the second exhaust solenoid valve is secured to the bottom of the lower base; and the piston end of the second exhaust solenoid valve extends into the second exhaust chamber and is in sealing fit with connections of the second exhaust chamber.

Further, the base further includes an upper cover, wherein one surface of the upper cover is provided with an air channel groove extending along the length direction of the upper cover, and the upper cover is detachably connected to the intermediate frame and the air channel groove is communicated with the second exhaust chamber and the diversion chamber of each three-way chamber, and the side of the intermediate frame connected with the upper cover is in sealing fit with the air channel groove to form the air channel.

Further, the upper cover is further provided with yielding holes in one-to-one correspondence to the airbag connecting pipe, and the airbag connecting pipe passes through the corresponding yielding holes in the upper cover.

Further, the base further includes a base extension portion including an intermediate frame extension portion and a lower base extension portion; the intermediate frame extension portion is detachably connected to the lower base extension portion; the base extension portion is secured to one end of the base; the first exhaust channel is arranged on the lower base extension portion; the intermediate frame extension portion is internally provided with a first exhaust chamber that is communicated with the pressure maintaining channel and the first exhaust channel; and the first exhaust chamber extends from the pressure maintaining channel to the intermediate frame extension portion.

Further, the first exhaust solenoid valve is secured to the bottom of the lower base extension portion, and the piston end of the first exhaust solenoid valve extends into the first exhaust chamber and is in a sealing fit with connections of the first exhaust chamber.

Further, the base extension portion further includes an upper cover extension portion detachably connected to the intermediate frame extension portion, the air intake port of the pressure maintaining channel is arranged on the upper cover extension portion, and the air intake port of the pressure maintaining channel is communicated with the first exhaust chamber.

Further, an air intake check valve is further provided and arranged at the air intake port of the pressure maintaining channel; the air intake check valve is configured to control opening and closing of the air intake port of the pressure maintaining channel, and is opened in the direction from the outside of the air intake port of the pressure maintaining channel to the first exhaust chamber.

Further, the upper cover extension portion and the upper cover are of an integral structure, the intermediate frame extension portion and the intermediate frame are of an integral structure, and the lower base extension portion and the lower base are of an integral structure.

Further, the first exhaust solenoid valve, the second exhaust solenoid valve and the air chamber solenoid valve are normally closed solenoid valves.

Further, tips of piston ends of the first exhaust solenoid valve, the second exhaust solenoid valve and the air chamber solenoid valve are all provided with sealing caps.

Further, the sealing caps are silicone sealing caps.

The present invention further discloses an air pressure massager, and the air pressure massager includes an air source and a plurality of airbags communicated with the air source, and further includes the air pressure adjusting device as described above, where a three-way chamber on the air pressure adjusting device is in one-to-one correspondence to the airbags, and each of the airbags is communicated with a corresponding airbag connecting pipe on the air pressure adjusting device; and the air source is communicated with a diversion chamber on each three-way chamber in the air pressure adjusting device through a second inflation channel.

Further, the air source is communicated with an air intake port of a pressure maintaining channel through a first inflation channel.

The present invention further discloses a method for controlling the air pressure massager, where when an air intake port of a pressure maintaining channel is closed, the pressure maintaining channel is inflated by an airbag; the pressure maintaining channel, a three-way chamber and a diversion chamber are selectively opened or closed to implement one action of pre-inflation for pressure maintaining, massage under pressure maintaining, pressure equalization, pressure regulation, and automatic pressure relief in power failure of the air pressure massager, or a combination of two actions thereof; when the air intake port of the pressure maintaining channel is opened and is communicated with an air source, the pressure maintaining channel, the three-way chamber and the diversion chamber are selectively opened or closed to implement any one action of pre-inflation for pressure maintaining, massage under pressure maintaining, pressure equalization, pressure regulation, and automatic pressure relief in power failure of the air pressure massager, or a combination of two actions thereof.

Further, when the air intake port of the pressure maintaining channel is closed, any airbag is inflated by the air source in the action of pre-inflation for pressure maintaining, and after the airbag is inflated, air in the airbag breaks through the check valve in the corresponding three-way chamber and enters the pressure maintaining channel to inflate the pressure maintaining channel, and a pressure in the pressure maintaining channel is increased to close the check valve to seal the pressure maintaining channel and keep the air pressure therein unchanged; when the air intake port of the pressure maintaining channel is opened and communicated with the air source, in the action of pre-inflation for pressure maintaining, the air source directly inflates the pressure maintaining channel in the air pressure adjusting device, and the pressure in the pressure maintaining channel is increased to seal the pressure maintaining channel to keep the air pressure therein unchanged.

Further, in the action of massage under pressure maintaining, the action of pre-inflation for pressure maintaining is firstly performed so that the pressure maintaining channel is kept sealed, each airbag is separately inflated by the air source, and the air pressure in each airbag is kept unchanged through the pressure maintaining channel.

Further, in the action of pressure equalization and pressure regulation, the action of pre-inflation for pressure maintaining is firstly performed so that the pressure maintaining channel is kept sealed, and the air pressure in each airbag is respectively changed by independently deflating the inflated airbag.

Further, in the action of automatic pressure relief in power failure, the pressure maintaining channel is automatically opened after the solenoid valves are all powered off, and each airbag is deflated and exhausted through the pressure maintaining channel.

The beneficial effects of the present invention are that:
**1. In** the present invention, the airbag connected with the airbag connecting pipe on the air pressure adjusting device is subjected to pressure maintaining through the air pressure adjusting device; the pressure maintaining channel of the air pressure adjusting device can be directly inflated through the air source of the air pressure massager; alternatively, after the airbag is inflated through the air source of the air pressure massager, the check valve between the pressure maintaining channel and the three-way chamber is broken through the high-pressure air in the airbag to inflate the pressure maintaining channel of the air pressure adjusting device, then a pressure difference is obtained between the inner and outer sides of the check valve, the check valve is kept in a closed state to seal the diversion chamber communicated with the airbag connecting pipe; the air in the airbag cannot flow back due to flowing failure and the pressure of the airbag is maintained, thereby solving the problem of air cross between the inflated airbag and the non-inflated airbag in an airbag inflation process, ensuring the smooth inflation of the airbag and shortening the inflation time of the airbag.
**2. In** the present invention, the air chamber solenoid valve fits with the check valve to seal the airbag exhaust channel; the pressure maintaining channel of the air pressure adjusting device is inflated to generate a pressure difference between both sides of the check valve, thereby ensuring that the check valve is in a closed state; the exhaust channel of the airbag can be opened only when the air chamber solenoid valve is powered on, thereby achieving the effect of preventing the airbag from being deflated when the air chamber solenoid valve is powered off, reducing the power consumption of the solenoid valve when the airbag is subjected to pressure maintaining, and achieving the good energy-saving and power-saving effect.
3. In the present invention, the air intake check valve is provided to automatically close the pressure maintaining channel of the air pressure adjusting device, and the pressure maintaining channel of the air pressure adjusting device is inflated to generate the pressure difference between both sides of the air intake check valve , so that the air intake check valve is automatically closed to seal the pressure maintaining channel when the air pressure in the pressure maintaining channel inside the air intake check valve is higher than that outside the air intake check valve . Consequently, the air in the pressure maintaining channel cannot be exhausted, the effect of maintaining the pressure inside the pressure maintaining channel is achieved, the air pressure outside the check valve is kept unchanged, and the pressure of the airbag is continuously maintained.
4. In the present invention, the air chamber solenoid valve fits with the check valve to prevent the airbag from deflation; after all airbags are inflated, the air pressure therein is kept unchanged, thereby preventing the airbags from being inflated again due to the deflation of the airbags, effectively shortening the inflation duration of the airbags and reducing the power consumption.
5. In the present invention, the opening and closing of the air chamber solenoid valves and the second exhaust solenoid valve are controlled to selectively inflate and deflate the airbags quantitatively, so that the pressure in each airbag can be independently adjusted. The air pressure massager can be used to adjust different airbags to have different massage pressures according to different massage positions, and can also be used to adjust the air pressures in different airbags to be consistent, so that the massage work is more targeted and the user has better massage experience.
6. The solenoid valves of the present invention are closed after powered off; after the air pressure massager is powered off, the pressure maintaining channel of the air pressure adjusting device can be opened for deflation and pressure relief by powering off the first exhaust solenoid valve and the air chamber solenoid valve, so that the air in the airbag can break through the check valve for deflation, all airbags are automatically deflated after the air pressure massager is powered off, a case that the airbags of the air pressure massager powered off always squeeze the limbs of the user is avoided, the potential safety hazard is eliminated, and the safety of massage work is increased.
7. In the present invention, the noise problem caused by the air cross is avoided by solving the air cross between the inflated airbag and the non-inflated airbag in the airbag inflation process, thereby bringing a quiet massage environment to the user and effectively improving the massage experience of the user in the use of the air pressure massager.
8. In the present invention, the airbag is subjected to pressure maintaining to keep the air pressure inside the inflated airbag, so that the pressure inside the airbag is consistent with the preset pressure, the control difficulty of airbag inflation and deflation is effectively reduced, the control accuracy of airbag inflation and deflation is improved, and the working stability of the air pressure massager is ensured.

### Brief Description of Drawings

FIG. 1 is a frontal isometric view of an air pressure adjusting device according to the present invention;
FIG. 2 is a rear isometric view of an air pressure adjusting device according to the present invention;
FIG. 3 is an exploded view showing a structure of an air pressure adjusting device according to a first embodiment of the present invention;
FIG. 4 is a longitudinal section view showing a structure of an air pressure adjusting device according to a first embodiment of the present invention;
FIG. 5 is an exploded view showing a structure of an air pressure adjusting device according to a second embodiment of the present invention;
FIG. 6 is a longitudinal section view showing a structure of an air pressure adjusting device according to a second embodiment of the present invention;
FIG. 7 is a schematic section view of an air pressure massager in a non-inflated state when an air pressure adjusting device is used according to a first embodiment of the present invention;
FIG. 8 is a transverse section view of the air pressure adjusting device in FIG. 7, where location A-A is a section view of location A-A in FIG. 7;
FIG. 9 is a schematic section view of an air pressure massager in a non-inflated state when an air pressure adjusting device is used according to a second embodiment of the present invention;
FIG. 10 is a transverse section view of the air pressure adjusting device in FIG. 9, where location A-A is a section view of location A-A in FIG. 9;
FIG. 11 is a section view of location B-B in FIG. 8;
FIG. 12 is a schematic section view of an air pressure massager of an air pressure adjusting device when a first airbag is inflated by an air source according to a first embodiment of the present invention;
FIG. 13 is a transverse section view of the air pressure adjusting device in FIG. 12, where location A-A is a section view of location A-A in FIG. 12;
FIG. 14 is a schematic section view of an air pressure massager of an air pressure adjusting device when the air pressure adjusting device is in advance inflated by the first airbag inflated to maintain pressure according to a first embodiment of the present invention;
FIG. 15 is a transverse section view of the air pressure adjusting device in FIG. 14, where location A-A is a section view of location A-A in FIG. 14;
FIG. 16 is a schematic section view of an air pressure massager of an air pressure adjusting device when the air pressure adjusting device is in advance inflated by an air source to maintain pressure according to a second embodiment of the present invention;
FIG. 17 is a transverse section view of the air pressure adjusting device in FIG. 16, where location A-A is a section view of location A-A in FIG. 16;
FIG. 18 is a schematic section view of an air pressure massager in a pressure maintaining state when a first airbag is inflated by an air source according to the present invention;
FIG. 19 is a transverse section view of the air pressure adjusting device in FIG. 18, where location A-A is a section view of location A-A in FIG. 18;
FIG. 20 is a schematic section view of an air pressure massager in a pressure maintaining state when a second airbag is inflated by an air source according to the present invention;
FIG. 21 is a transverse section view of the air pressure adjusting device in FIG. 20, where location A-A is a section view of location A-A in FIG. 20;
FIG. 22 is a schematic section view of an air pressure massager in a pressure maintaining state when a third airbag is inflated by an air source according to the present invention;
FIG. 23 is a transverse section view of the air pressure adjusting device in FIG. 22, where location A-A is a section view of location A-A in FIG. 22;
FIG. 24 is a schematic section view of an air pressure massager in a pressure maintaining state when a fourth airbag is inflated by an air source according to the present invention;
FIG. 25 is a transverse section view of the air pressure adjusting device in FIG. 24, where location A-A is a section view of location A-A in FIG. 24;
FIG. 26 is a schematic section view of an air pressure massager in a pressure maintaining state when a fifth airbag is inflated by an air source according to the present invention;
FIG. 27 is a transverse section view of the air pressure adjusting device in FIG. 26, where location A-A is a section view of location A-A in FIG. 26;
FIG. 28 is a schematic section view of an air pressure massager when a first airbag is subjected to deflation and pressure regulation according to the present invention;
FIG. 29 is a transverse section view of the air pressure adjusting device in FIG. 28, where location A-A is a section view of location A-A in FIG. 28;
FIG. 30 is a schematic section view of an air pressure massager when a second airbag is subjected to deflation and pressure regulation according to the present invention;
FIG. 31 is a transverse section view of the air pressure adjusting device in FIG. 30, where location A-A is a section view of location A-A in FIG. 30;
FIG. 32 is a schematic section view of an air pressure massager when a third airbag is subjected to deflation and pressure regulation according to the present invention;
FIG. 33 is a transverse section view of the air pressure adjusting device in FIG. 32, where location A-A is a section view of location A-A in FIG. 32;
FIG. 34 is a schematic section view of an air pressure massager when a fourth airbag is subjected to deflation and pressure regulation according to the present invention;
FIG. 35 is a transverse section view of the air pressure adjusting device in FIG. 34, where location A-A is a section view of location A-A in FIG. 34;
FIG. 36 is a schematic section view of an air pressure massager when a fifth airbag is subjected to deflation and pressure regulation according to the present invention;
FIG. 37 is a transverse section view of the air pressure adjusting device in FIG. 36, where location A-A is a section view of location A-A in FIG. 36;
FIG. 38 is a schematic section view of an air pressure massager during deflation and pressure relief according to the present invention;
FIG. 39 is a transverse section view of the air pressure adjusting device in FIG. 38, where location A-A is a section view of location A-A in FIG. 38;

Reference signs in the drawings are: 100-base, 110-lower base, 120-intermediate frame, 130-intake and exhaust channel, 140-exhaust channel, 150-upper cover, 151-yielding hole, 160-check valve fixing plate, 161-first mounting half chamber, 162-second mounting half chamber, 163-pressure maintaining channel groove, 170-sealing side cover plate, 180-air channel, 190-second exhaust chamber, 191-second exhaust channel, 192-second exhaust solenoid valve, 200-pressure maintaining channel, 210-air intake port of pressure maintaining channel, 220-first exhaust channel, 230-first exhaust solenoid valve, 240-air intake check valve , 300-three-way chamber, 310- diversion chamber, 320-check valve, 400-airbag connecting pipe, 500-air chamber solenoid valve, 600-base extension portion, 610-upper cover extension portion, 620-intermediate frame extension portion, 630-lower base extension portion, 631-first exhaust chamber, 700-air source, 710-first inflation channel, 720-second inflation channel, 730-tee joint, 740-pressure sensor, 800-airbag, 810-connecting pipe,
301-first three-way chamber, 302-second three-way chamber, 303-third three-way chamber, 304-fourth three-way chamber, 305-fifth three-way chamber,
311-first diversion chamber, 312-second diversion chamber, 313-third diversion chamber, 314-fourth diversion chamber and 315-fifth diversion chamber,
321-first check valve, 322-second check valve, 323-third check valve, 324-fourth check valve, 325-fifth check valve,
401-first airbag connecting pipe, 402-second airbag connecting pipe, 403-third airbag connecting pipe, 404-fourth airbag connecting pipe, 405-fifth airbag connecting pipe,
501-first air chamber solenoid valve, 502-second air chamber solenoid valve, 503-third air chamber solenoid valve, 504- fourth air chamber solenoid valve, 505-fifth air chamber solenoid valve,
801-first airbag, 802-second airbag, 803-third airbag, 804-fourth airbag, 805-fifth airbag,
910-airbag pipeline, 920-air pump inflation channel, 930- airbag deflation channel, 940-solenoid valve, 941-first solenoid valve, 942-second solenoid valve, 943-third solenoid valve, 944-fourth solenoid valve, 945-fifth solenoid valve,

### Detailed Description

In order to facilitate the understanding of the present invention, the present invention will be further described with reference to the accompanying drawings and embodiments.

In the descriptions of the present invention, it should be noted that the azimuth or positional relationship indicated by the terms "front", "rear", "left", "right", "upper", "lower", "inner" and the like is based on the azimuth or positional relationship shown in the accompanying drawings, and is intended only for the convenience of description, and does not indicate or imply that the referred device or component must have a specific azimuth, be constructed and operated in a specific azimuth, and therefore cannot be construed as a limitation of the present invention.

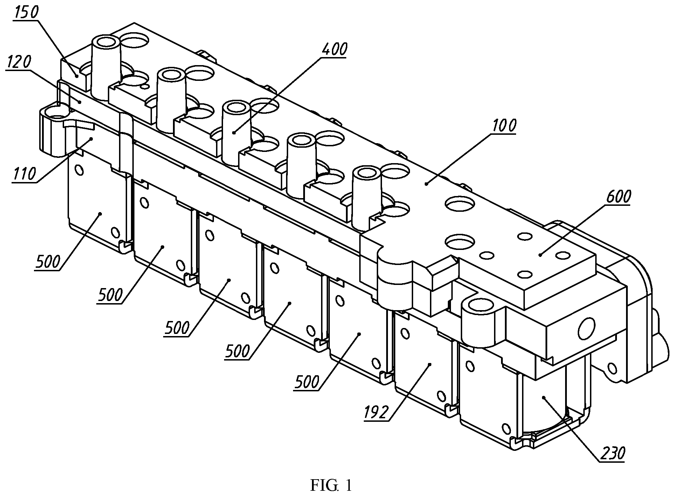

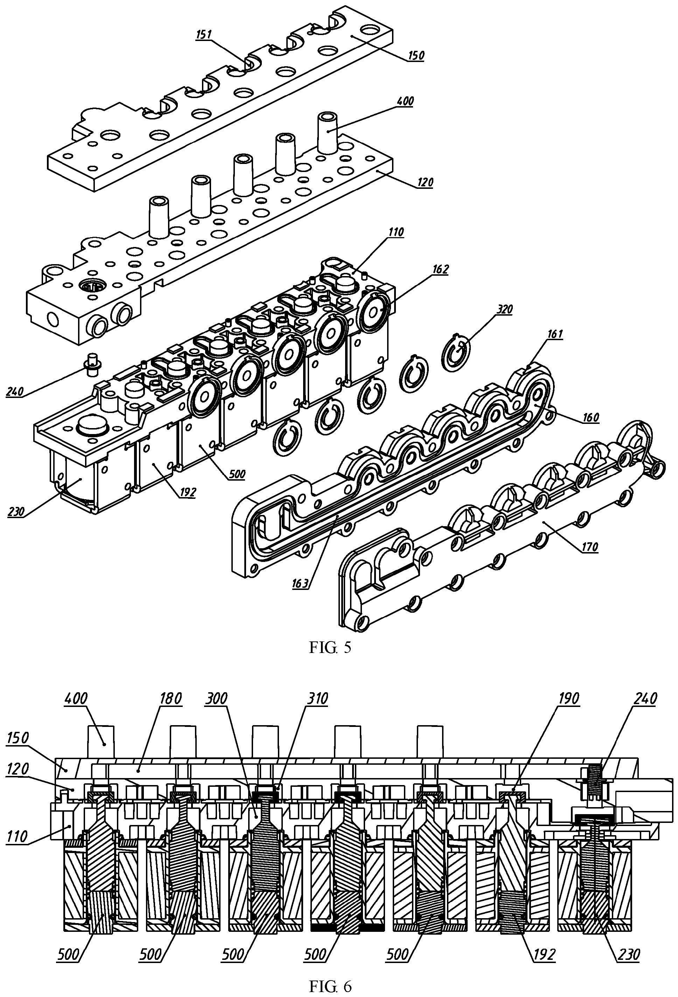

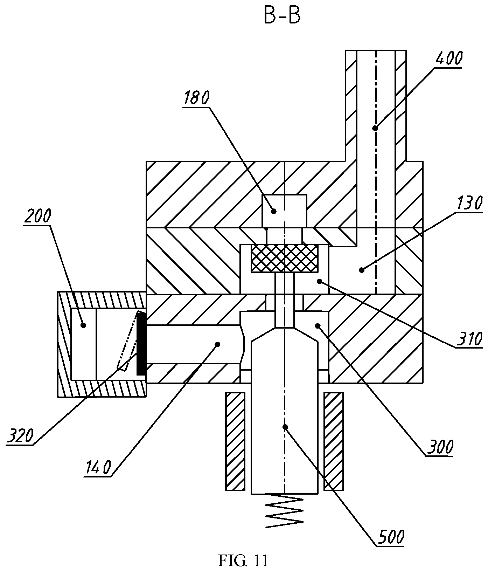

As shown in FIG. 1 to FIG. 11, a main structure of an air pressure adjusting device disclosed herein is a base 100, and a pressure maintaining channel 200 and a three-way chamber 300 are arranged in the base 100. The pressure maintaining channel 200 can serve as the air channel of the air pressure adjusting device, the air intake port 210 of the pressure maintaining channel and a first exhaust channel 220 are provided on the pressure maintaining channel 200, both the air intake port 210 of the pressure maintaining channel and the first exhaust channel 220 can be opened and closed, air can be delivered into the pressure maintaining channel 200 through the air intake port 210 of the pressure maintaining channel or the three-way chamber 300, and the pressure maintaining channel 200 can be exhausted through the first exhaust passage 220. A diversion chamber 310 in one-to-one correspondence to each three-way chamber 300 is arranged in the base 100 and communicated with the corresponding three-way chamber 300 and an airbag connecting pipe 400 secured to the base 100; the diversion chamber 310 can also be opened and closed; and the airbag connecting pipe 400 is connected with an airbag of an air pressure massager or other devices with similar airbag structures. The diversion chamber 310 and the pressure maintaining channel 200 are connected to different positions of the three-way chamber 300. FIG. 11 is taken as an example, if the pressure maintaining channel 200 is communicated with the lower part of the three-way chamber 300, the diversion chamber 310 is communicated with the upper part of the three-way chamber 300.

For the air pressure adjusting device disclosed herein, an important component for maintaining the pressure of the airbag 800 is a check valve 320 arranged at the connection between each three-way chamber 300 and the pressure maintaining channel 200, and the check valve 320 is limited to open in the direction from the three-way chamber 300 to the pressure maintaining channel 200. In the present invention, the principle of realizing pressure maintaining through the air pressure adjusting device is that: the air pressure in the pressure maintaining channel 200 of the air pressure adjusting device is continuously increased through inflation; because the check valve 320 is limited by the opening direction, air can only flow from the direction of the three-way chamber 300 to the direction of the pressure maintaining channel 200 through the check valve 320, but not from the direction of the pressure maintaining channel 200 to the direction of the three-way chamber 300 through the check valve 320, the check valve 320 is closed by the top pressure of the high-pressure air, and the air pressure value of the pressure maintaining channel 200 is continuously increased to the preset air pressure value, and then the air intake port 210 of the pressure maintaining channel is closed, but the high-pressure air in the pressure maintaining channel 200 cannot be exhausted and is kept at constant air pressure; in this case, the check valve 320 can only be opened when the air pressure value of the three-way chamber 300 is greater than that of the pressure maintaining channel 200. As long as the pressure value of the pressure maintaining channel 200 is set to be greater than the maximum air pressure of the three-way chamber 300 and the three-way chamber 300 is closed after the three-way chamber 300 is communicated with the airbag 800 through the airbag connecting pipe 400, the air pressure in the airbag 800 and the three-way chamber 300 will be kept constant when the pressure maintaining channel 200 is not actively opened for deflation and pressure relief, thereby finally achieving the effect of pre-inflation for pressure maintaining.

According to different inflation modes adopted for the pressure maintaining channel 200, the following two different implementation structures can be used for the air pressure adjusting device of the present invention:
A first embodiment of the air pressure adjusting device is as shown in FIG. 1 to FIG. 4, FIG. 7 and FIG. 8. The airbag 800 is used to inflate the pressure maintaining channel 200 through the three-way chamber 300. In the embodiment, the air intake port 210 of the pressure maintaining channel does not need to serve as an air intake port, so it is set to be in a normally closed state. In order to simplify the structure, the air intake port 210 of the pressure maintaining channel can be directly sealed or omitted. When the pressure maintaining channel 200 is inflated for pressure maintaining, one or more airbags 800 are inflated in advance, air entry is stopped after the airbags 800 are inflated, the channel for inflating the airbags 800 is closed, and the channel between the airbags 800 and the corresponding three-way channel 300 is communicated. As the air pressure is increased after the airbags 800 are inflated, the air in the airbags 800 will flow in the low pressure direction. The air in the airbag 800 enters the three-way chamber 300 and then enters the pressure maintaining channel 200 through the check valve 320. Because the check valve 320 is limited by the opening direction, air can only flow from the direction of the three-way chamber 300 to the direction of the pressure maintaining channel 200 through the check valve 320, but not from the direction of the pressure maintaining channel 200 to the direction of the three-way chamber 300 through the check valve 320, and the air pressure in the pressure maintaining channel 200 is continuously increased to a preset air pressure, then the air in the pressure maintaining channel 200 breaks through and closes the check valve 320, and the pressure maintaining channel 200 forms a sealed channel, so that the high-pressure air in the pressure maintaining channel 200 cannot be exhausted and kept in a stable air pressure; in this case, the check valve 320 can only be opened when the air pressure value of the three-way chamber 300 is greater than that of the pressure maintaining channel 200. As long as the preset pressure value of the pressure maintaining channel 200 is set to be greater than the maximum air pressure value of the three-way chamber 300 (namely, greater than the maximum inflation pressure value) and the three-way chamber 300 is communicated with the airbags 800, the air pressure values of the airbag 800 and the three-way chamber 300 will be kept constant when the pressure maintaining channel 200 is not actively opened for deflation and pressure relief, thereby finally achieving the effect of pressure maintaining during pre-charging.

A second embodiment of the air pressure adjusting device is as shown in FIG. 1, FIG. 2, FIG. 5, FIG. 6, FIG. 9 and FIG. 10. The pressure maintaining channel 200 is inflated for pressure maintaining by an external air source through the air intake port 210 of the pressure maintaining channel. In the embodiment, the air intake port 210 of the pressure maintaining channel serves as an air intake port, so the air intake port 210 of the pressure maintaining channel needs to be opened and communicated with the external air source. When the pressure maintaining channel 200 is inflated for pressure maintaining, the pressure maintaining channel 200 is inflated by the external air source via the air intake port 210 of the pressure maintaining channel. The air pressure in the pressure maintaining channel 200 of the air pressure adjusting device is continuously increased through inflation; because the check valve 320 is limited by the opening direction, air can only flow from the direction of the three-way chamber 300 to the direction of the pressure maintaining channel 200 through the check valve 320, but not from the direction of the pressure maintaining channel 200 to the direction of the three-way chamber 300 through the check valve 320, the check valve 320 is closed by the top pressure of the high-pressure air, and the air pressure in the pressure maintaining channel 200 is continuously increased to a preset air pressure, then the air intake 210 of the pressure maintaining channel is closed, but the high-pressure air in the pressure maintaining channel 200 cannot be exhausted and kept at constant air pressure; in this case, the check valve 320 can only be opened when the air pressure in the three-way chamber 300 is higher than that in the pressure maintaining channel 200. As long as the pressure in the pressure maintaining channel 200 is set to be higher than the maximum air pressure in the three-way chamber 300 and the three-way chamber 300 is closed after the three-way chamber 300 is communicated with the airbag 800 through the airbag connecting pipe 400, the air pressure in the airbag 800 and the three-way chamber 300 will be kept stable when the pressure maintaining channel 200 is not actively opened for deflation and pressure relief, thereby finally achieving the effect of pressure maintaining during pre-charging.

As mentioned above, both the diversion chamber 310 and the first exhaust channel 220 according to the present invention can be opened and closed. Specifically, the opening and closing of the diversion chamber 310 and the first exhaust channel 220 are controlled by solenoid valves, and the opening and closing of the diversion chamber 310 is controlled by the air chamber solenoid valve 500, while the opening and closing of the first exhaust channel 220 is controlled by the first exhaust solenoid valve 230. The number of the air chamber solenoid valves 500 is consistent with that of the diversion chambers 310, the air chamber solenoid valves 500 are in one-to-one correspondence to the diversion chambers 310, and both the air chamber solenoid valves 500 and the first exhaust solenoid valve 230 are mounted on the base 100.

As shown in FIG. 1 to FIG. 11, the base 100 used in the air pressure adjusting device of the present invention includes a lower base 110 and an intermediate frame 120. The lower base 110 is the fixing portion of the air chamber solenoid valve 500 and the first exhaust solenoid valve 230, and a plurality of three-way chambers 300 are spaced apart along the length direction of the lower base 110 and are arranged inside the lower base 110. The intermediate frame 120 is detachably secured to the top of the lower base 110, and the intermediate frame 120 and the lower base 110 can be assembled together by fasteners, a buckling structure, and other existing connection methods. A plurality of diversion chambers 310 are spaced apart along the length direction of the intermediate frame 120 and are arranged inside the intermediate frame 120. After the lower base 110 and the intermediate frame 120 are assembled, the diversion chambers 310 are located above and communicated with the corresponding three-way chambers 300. As a preferred embodiment, the air chamber solenoid valve 500 can be mounted in the three-way chamber 300 of the present invention, the top of the valve base of the air chamber solenoid valve 500 is secured into the corresponding three-way chamber 300, the piston end of the air chamber solenoid valve 500 passes through the corresponding three-way chamber 300 and extends into the upper diversion chamber 310, and the air chamber solenoid valve 500 can open and close the diversion chamber 310 by lifting the piston end. The size of the piston end of the air chamber solenoid valve 500 is greater than the aperture of the connection between the diversion chamber 310 and the three-way chamber 300, so when the piston end of the air chamber solenoid valve 500 descends to the connection between the diversion chamber 310 and the three-way chamber 300, the diversion chamber 310 can be isolated from the three-way chamber 300, and no air can flow between the diversion chamber 310 and the three-way chamber 300. In addition, an intake and exhaust channel 130 is further arranged in the intermediate frame 120; the diversion chamber 310 and the airbag connecting pipe 400 are communicated through the intake and exhaust channel 130; the air intake and exhaust channel 130 is in one-to-one correspondence to the diversion chamber 310; the airbag connecting pipe 400 is secured to the top of the intermediate frame 120; and the bottom of the airbag connecting pipe 400 extends into the intermediate frame 120 to be communicated with the corresponding air intake and exhaust channel 130. The airbag connecting pipe 400 is used to connect the air pressure adjusting device with the airbag 800 of the air pressure massager. In order to facilitate the connection between the airbag connecting pipe 400 and the airbag 800, a conical pipe can be used as the airbag connecting pipe 400, and the outer diameter of one end of the airbag connecting pipe 400 communicated with the air intake and exhaust channel 130 is limited to be greater than the outer diameter of the other end, so that the airbag connecting pipe 400 can be clamped with the airbag 800 quickly and conveniently.

In addition, air cross during airbag inflation can also be solved by additionally providing the check valve in the diversion chamber 310 alone, and connectivity between the diversion chamber 310 and the inflation channel 180 can be controlled by the check valve. Specifically, the number of check valves is the same as that of airbags, and the check valves are arranged at the connection between the diversion chamber 310 and the inflation channel 180, so as to limit the check valves to be opened in the direction from the inflation channel 180 to the diversion chamber 310. When the airbag is inflated, the high-pressure air introduced into the inflation channel 180 from an external air source breaks through the check valve and sequentially passes through the diversion chamber 310, the air intake and exhaust channel 130 and the airbag connecting pipe 400, and then the corresponding airbag 800 is inflated. When the pressure in the airbag 800 reaches or approaches that in the inflation channel 180, the check valve between the diversion chamber 310 and the inflation channel 180 will be automatically closed due to the balance of the pressure on both sides. After the check valve is closed, the check valve between the diversion chamber 310 and the inflation channel 180 will not be opened as long as the pressure in the inflation channel 180 does not increase with the high pressure of the airbag 800, so that the pressure in the airbag 800 can be kept constant. Specifically, when the first airbag 801 needs to be inflated, the first air chamber solenoid valve 501 is opened, and the high-pressure air from the inflation channel 180 breaks through the check valve in the first diversion chamber 311 to inflate the first airbag 801. After the inflation is completed, the air pressure in the first airbag 801 is higher than that in the inflation channel 180, and the check valve in the first diversion chamber 311 is pushed back to close. Then, the second airbag 802 is inflated, and the second air chamber solenoid valve 502 is opened. The high-pressure air from the inflation channel 180 breaks through the check valve in the second diversion chamber 312 to inflate the second airbag 802. Because the check valve in the first diversion chamber 311 can only be unidirectionally conducted, the high-pressure air in the first airbag 801 will not break through the check valve in the first diversion chamber 311 and flow back to the inflation channel 180, and the air in the first airbag 801 will not string into the second airbag 802. Similarly, when a third airbag 803, a fourth airbag 804 and a fifth airbag 805 are inflated respectively, only the third air chamber solenoid valve 503, the fourth air chamber solenoid valve 504 and the fifth air chamber solenoid valve 505 need to be correspondingly opened; the check valves corresponding to the second airbag 802, the third airbag 803 and the fourth airbag 804 that are inflated will be automatically closed, so there will be no air cross between the airbags.

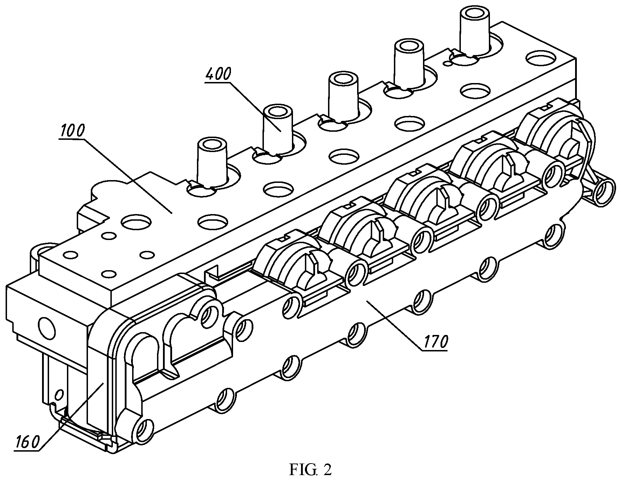

As shown in FIG. 2, FIG. 10 and FIG. 11, the three-way chamber 300 is communicated with the pressure maintaining channel 200 by the exhaust channel 140 arranged in the lower base 110, the exhaust channel 140 is in one-to-one correspondence to the three-way chamber 300 and is arranged between the corresponding three-way chamber 300 and the pressure maintaining channel 200, and the check valve 320 is arranged at the connection between the exhaust channel 140 and the pressure maintaining channel 200. The check valve 320 is opened in the direction from the exhaust channel 140 to the pressure maintaining channel 200, that is, air can flow from the exhaust channel 140 to the pressure maintaining channel 200 through the check valve 320, but not from the pressure maintaining channel 200 to the exhaust channel 140 through the check valve 320.

As shown in FIG. 2, FIG. 3, FIG. 5 and FIG. 6, in order to mount the check valve 320, the base 100 of the air pressure adjusting device of the present invention further includes a check valve fixing plate 160 that can be detachably connected to the side surface of the lower base 110 through the fasteners, the buckling structure or the like; and a plurality of first mounting half chambers 161 are secured to the check valve fixing plate 160. In addition, a plurality of second mounting half chambers 162 corresponding to the first mounting half chambers 161 are secured to the side surface of the lower base 110, and the second mounting half chambers 162 are communicated with the corresponding three-way chambers 300 in the lower base 110 through the exhaust channel 140. After the check valve fixing plate 160 and the lower base 110 are assembled, the first mounting half chamber 161 and the second mounting half chamber 162 are butted to form a chamber for accommodating the check valve 320. Here, the check valve 320 is a single wafer check valve, and the check valve 320 is unidirectionally broken through by the pressure of air on the check valve 320.

A sealing side cover plate 170 and the check valve fixing plate 160 that are arranged on the base 100 are assembled to form the pressure maintaining channel 200 of the present invention. As shown in FIG. 2, FIG. 3, FIG. 5 and FIG. 6, the check valve fixing plate 160 is provided with pressure maintaining channel grooves 163 extending along the length direction of the check valve fixing plate 160, and the pressure maintaining channel grooves 163 are communicated with each first mounting half chamber 161 in the check valve fixing plate 160. When the sealing side cover plate 170 is connected to the side of the check valve fixing plate 160 that is not connected to the lower base 110 and the pressure maintaining channel grooves 163 are completely covered and sealed by the sealing side cover plate 170, and the pressure maintaining channel grooves 163 fit with the sealing side cover plate 170 to form the pressure maintaining channel 200.

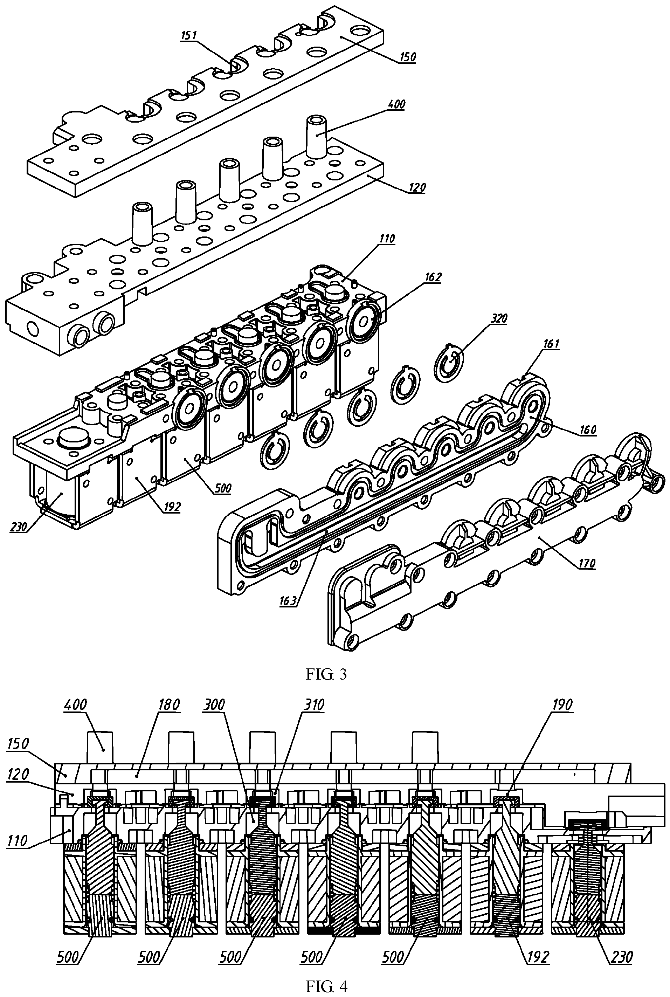

After the air pressure adjusting device and the air pressure massager are assembled, in order to simplify the structure and save the occupied space, both the inflation channel of the airbag 800 and the exhaust channel thereof are integrated into the air pressure adjusting device. As shown in FIG. 4, and FIG. 6 to FIG. 10, the base 100 is further provided with an air channel 180 and a second exhaust chamber 190; the air channel 180 is provided with the air intake port of the air channel; the air intake port of the air channel is communicated with the air source for inflation; the air channel 180 is communicated with the diversion chamber 310 of each three-way chamber 300; the second exhaust chamber 190 is communicated with the air channel 180; and a second exhaust channel 191 is communicated with the second exhaust chamber 190 at the place not communicated with the air channel (180). The second exhaust chamber 190 can be opened and closed. When the second exhaust chamber 190 is opened, the second exhaust chamber 190 is communicated with the air channel 180, and the air in the airbag 800 can enter the second exhaust chamber 190 through the air channel 180 and be exhausted through the second exhaust channel 191, thus achieving the deflation of the airbag 800. In this case, the air channel 180 can serve as an exhaust channel. When the second exhaust chamber 190 is closed, the second exhaust chamber 190 is isolated from the air channel 180, and the air in the air channel 180 cannot enter the second exhaust chamber 190, and the air channel 180 can only serve as an inflation channel. In the present invention, as the air channel 180, the second exhaust chamber 190 and the second exhaust channel 191 are arranged, the single airbag 800 can be deflated to adjust the air pressure in the single airbag 800 individually.

Like the opening and closing principle of the diversion chamber 310, in the present invention, the second exhaust solenoid valve 192 is used to control the opening and closing of the second exhaust chamber 190. As shown in FIG. 3 to FIG. 6, the second exhaust solenoid valve 192 is secured to the bottom of the lower base 110 and the piston end of the second exhaust solenoid valve 192 extends into the second exhaust chamber 190. The second exhaust solenoid valve 192 opens and closes the second exhaust chamber 190 through the lifting of the piston end. The size of the piston end of the second exhaust solenoid valve 192 is greater than the aperture of the connection between the second exhaust chamber 190 and the air channel 180, so when the piston end of the second exhaust solenoid valve 192 rises to the connection between the second exhaust chamber 190 and the air channel 180, the second exhaust chamber 190 can be isolated from the air channel 180, and the second exhaust chamber 190 is closed. In this case, no air circulates between the second exhaust chamber 190 and the air channel 180. When the piston end of the second exhaust solenoid valve 192 descends, the piston end of the second exhaust solenoid valve 192 no longer isolates the second exhaust chamber 190 from the air channel 180, and the second exhaust chamber 190 is opened. In this case, the air in the air channel 180 can enter the second exhaust chamber 190 and be exhausted through the second exhaust channel 191.

Specifically, as shown in FIG. 1 to FIG. 11, the upper cover 150 and the intermediate frame 120 that are arranged on the base 100 are assembled to form the air channel 180 of the present invention, where an air channel groove extending along the length direction of the upper cover 150 is formed in the side of the upper cover 150, and the side of the upper cover 150 provided with the air channel groove is opposite to and connected with the top of the intermediate frame 120, so that the air channel groove is communicated with the second exhaust chamber 190 and each diversion chamber 310. The intermediate frame 120 completely covers and seals the air channel groove in the upper cover 150, so that the side of the intermediate frame 120 connected with the upper cover 150 is in sealing fit with the air channel groove to form the air channel 180.

As shown in FIG. 1 to FIG. 3, and FIG. 5, the airbag connecting pipe 400 is secured to the top of the intermediate frame 120, and a yielding hole 151 can be opened in the upper cover 150 to yield the airbag connecting pipe 400. The yielding hole 151 is in one-to-one correspondence to the airbag connecting pipe 400, and the airbag connecting pipe 400 passes through the corresponding yielding hole 151 in the upper cover 150.

As shown in FIG. 1, FIG. 9 and FIG. 10, in the present invention, a base extension portion 600 extends from one end of the base 100 to provide the air intake port 210 of the pressure maintaining channel, the first exhaust channel 220 and the first exhaust solenoid valve 230. The base extension portion 600 is composed of an upper cover extension portion 610, an intermediate frame extension portion 620 and a lower base extension portion 630, and the intermediate frame extension portion 620 is detachably connected between the upper cover extension portion 610 and the lower base extension portion 630 through the fasteners, the buckling structure or other connection methods. The air intake port 210 of the pressure maintaining channel is arranged in the upper cover extension portion 610, and the intermediate frame extension portion 620 is internally provided with a first exhaust chamber 631 communicated with the air intake port 210 of the pressure maintaining channel and the first exhaust channel 220, and the first exhaust chamber 631 is formed by extending the pressure maintaining channel 200 into the intermediate frame extension portion 620. In the present invention, the first exhaust solenoid valve 230 is used to control the opening and closing of the first exhaust channel 220. The first exhaust solenoid valve 230 is secured to the bottom of the lower base extension portion 630 and the piston end of the first exhaust solenoid valve 230 extends into the first exhaust chamber 631. Since the first exhaust channel 220 is communicated with the first exhaust chamber 631, the first exhaust solenoid valve 230 can open and close the first exhaust channel 220 through the lifting of the piston end. The size of the piston end of the first exhaust solenoid valve 230 is greater than the aperture of the connection between the first exhaust channel 220 and the first exhaust channel 631. When the piston end of the first exhaust solenoid valve 230 descends to the connection between the first exhaust channel 220 and the first exhaust channel 631, the first exhaust channel 220 can be isolated from the first exhaust chamber 631, and the first exhaust channel 220 is closed. In this case, air cannot circulate between the pressure maintaining channel 200 communicated with the first exhaust chamber 631 and the first exhaust channel 220, so air in the pressure maintaining channel 200 cannot be exhausted by the first exhaust channel 220; when the piston end of the first exhaust solenoid valve 230 rises, the connection between the first exhaust channel 220 and the first exhaust chamber 631 is no longer sealed by the piston end of the first exhaust solenoid valve 230, and the first exhaust channel 220 is opened. In this case, the air in the pressure maintaining channel 200 can enter the first exhaust channel 220 through the first exhaust chamber 631 and can be exhausted through the first exhaust channel 220.

As mentioned above, the air intake port 210 of the pressure maintaining channel of the present invention can be opened and closed, and the air intake port 210 of the pressure maintaining channel in the first embodiment of the air pressure adjusting device is normally closed. However, the air intake port 210 of the pressure maintaining channel in the second embodiment of the air pressure adjusting device needs to be opened to be communicated with an external air source in the pressure maintaining process during inflation, and closed in the pressure maintaining process after inflation. Specifically, in the second embodiment of the air pressure adjusting device, the air intake port 210 of the pressure maintaining channel is automatically opened and closed by the air intake check valve 240 arranged in the air intake port 210 of the pressure maintaining channel, and the air intake check valve 240 controls the opening and closing of the air intake port 210 of the pressure maintaining channel, and the air intake check valve 240 is opened in the direction from the outside of the air intake port 210 to the first exhaust chamber 631. When the air is delivered into the pressure maintaining channel 200 by the air source through the air intake port 210 of the pressure maintaining channel, because the opening direction of the air intake check valve 240 is limited, the air can enter the first exhaust chamber 631 from the side of the air intake port 210 of the pressure maintaining channel communicated with the air source through the air intake check valve 240. With the increasing air pressure in the pressure maintaining channel 200, the air source is turned off to stop air delivery when the air pressure in the pressure maintaining channel 200 reaches a set pressure. Then, the air intake check valve 240 is automatically closed under the internal pressure of the pressure maintain channel 200 to close the air intake port 210 of the pressure maintaining channel, and the pressure maintaining channel 200 can be completely closed through a combination of the check valve 320 and the first exhaust solenoid valve 230 to keep the air pressure in the pressure maintaining channel 200 unchanged, thus achieving the pressure maintaining effect.

The base extension portion 600 can be integrated with the base 100 to simplify the overall structure of the air pressure adjusting device and reduce the occupied space, that is, the upper cover extension portion 610 and the upper cover 150 are of an integral structure, the intermediate frame extension portion 620 and the intermediate frame 120 are of an integral structure, and the lower base extension portion 630 and the lower base 110 are of an integral structure.

In the present invention, the first exhaust solenoid valve 230, the second exhaust solenoid valve 192 and the air chamber solenoid valve 500 are all normally closed solenoid valves, and when the normally closed solenoid valves are adopted, the solenoid valves are in an open state when powered on and in a closed state when powered off, so that the air in all airbags and channels can be exhausted when the solenoid valves are powered off, and the power consumption of the solenoid valves can be effectively reduced, thereby achieving the effects of energy saving and power saving.

Further, in order to improve the sealing effect of the solenoid valves on each chamber, sealing caps can be arranged at the tips of the piston ends of the first exhaust solenoid valve 230, the second exhaust solenoid valve 192 and the air chamber solenoid valve 500, and silicone sealing caps with good elasticity are preferred sealing caps.

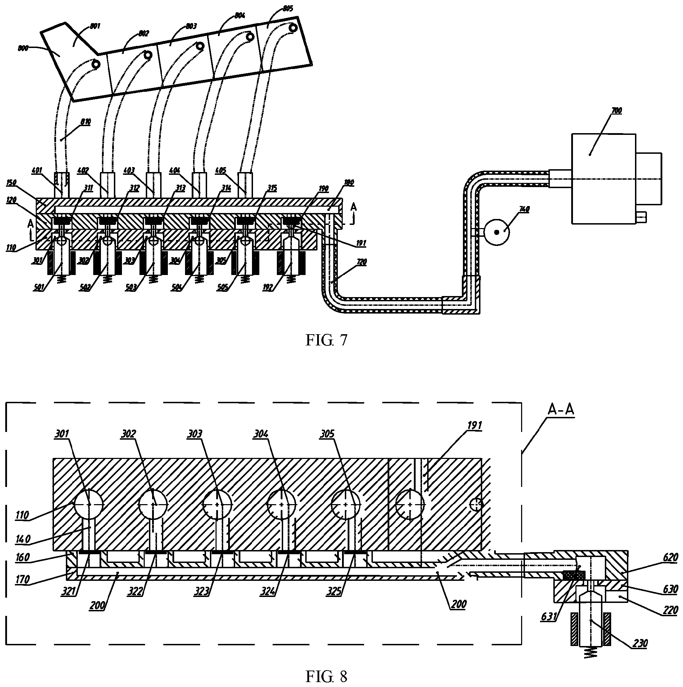

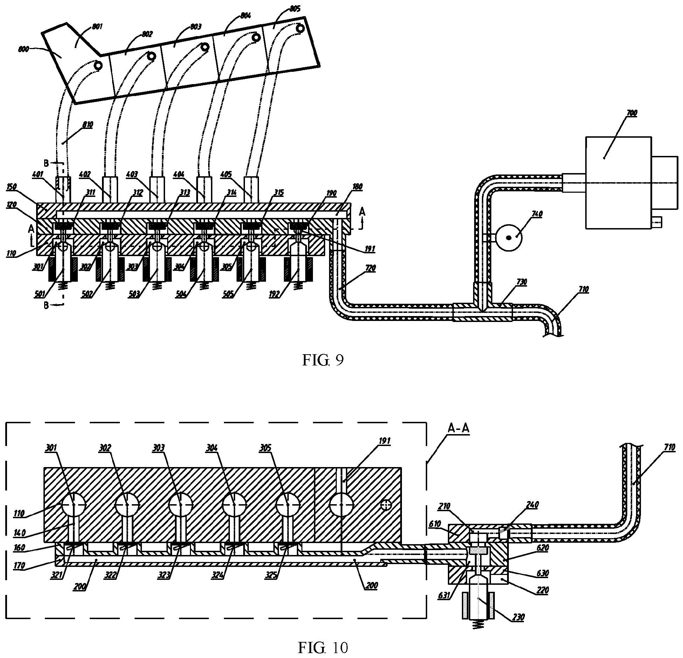

The present invention also discloses an air pressure massager including the air pressure adjusting device. As shown in FIG. 7 to FIG. 10, the air pressure massager includes an air source 700 and a plurality of airbags 800, and the airbags 800 can be inflated by the air source 700. The base 100 of the air pressure adjusting device can be directly mounted on the original control component of the air pressure massager, thus integrating the air pressure adjusting device, the control component and the air source 700. The airbag 800 on the air pressure massager is in one-to-one correspondence to the three-way chamber 300 in the air pressure adjusting device, and the airbag 800 is connected with the corresponding airbag connecting pipe 400. Because it is difficult to connect the airbag 800 with the airbag connecting pipe 400, the connecting pipe 810 can serve as a relay pipe between the airbag 800 and the airbag connecting pipe 400, and the connecting hose is preferably used as the connecting pipe 810 and can be bent during assembly to reduce the occupied space. In the second embodiment of the air pressure adjusting device, as shown in FIG. 9 and FIG. 10, the air source 700 is communicated with the air intake port 210 of the pressure maintaining channel through a first inflation channel 710 and communicated with the air intake port of the air channel 180 through a second inflation channel 720, so that the air source 700 is communicated with the diversion chamber 310 of each three-way chamber 300 in the air pressure adjusting device. In the first embodiment of the air pressure adjusting device, as shown in FIG. 7 and FIG. 8, the air source 700 is communicated with the air intake port of the air channel 180 only through the second inflation channel 720, so that the air source 700 is communicated with the diversion chamber 310 of each three-way chamber 300 in the air pressure adjusting device. In the embodiment, the pressure maintaining channel 200 does not need to be directly supplied with air by the air source 700, so the air intake port 210 of the pressure maintaining channel is closed, and a communication structure does not need to be directly arranged between the air source 700 and the air intake port 210 of the pressure maintaining channel.

Generally, a common air pump is used as the air source 700, and two air sources 700 may be provided, and the first inflation channel 710 and the second inflation channel 720 are respectively communicated with the two air sources 700. In order to simplify the structure and save the cost, only one air source 700 can be used. In the second embodiment of the air pressure adjusting device, the air source 700 is communicated with the first inflation channel 710 and the second inflation channel 720 by a tee joint 730, that is, the inlet end of the tee joint 730 is communicated with the outlet end of the air source 700, and two outlet ends of the tee joint 730 are respectively connected with the inlet end of the first inflation channel 710 and the outlet end of the second inflation channel 720.

Because the control component of the air pressure massager needs to control the opening and closing of each solenoid valve according to the air pressure of each channel to implement pressure maintaining, pressure equalization or pressure relief of the air pressure adjusting device, a pressure sensor 740 is arranged in the pipeline between the air source 700 and the air pressure massager, and the pressure sensor 740 is electrically connected with the control component of the air pressure massager and can transmit the monitored air pressure data to the control component of the air pressure massager, to facilitate the accurate monitoring of the air pressure.

In the present invention, the air pressure massager is provided with five airbags 800. The airbags 800 include a first airbag 801, a second airbag 802, a third airbag 803, a fourth airbag 804 and a fifth airbag 805. Correspondingly, the three-way chamber 300, the diversion chamber 310, the check valve 320, the airbag connecting pipe 400 and the air chamber solenoid valve 500 are respectively provided in five. In other words, the three-way chamber 300 includes a first three-way chamber 301, a second three-way chamber 302, a third three-way chamber 303, a fourth three-way chamber 304 and a fifth three-way chamber 305. The diversion chamber 310 includes a first diversion chamber 311, a second diversion chamber 312, a third diversion chamber 313, a fourth diversion chamber 314 and a fifth diversion chamber 315. The check valve 320 includes a first check valve 321, a second check valve 322, a third check valve 323, a fourth check valve 324, and a fifth check valve 325. The airbag connecting pipe 400 includes a first airbag connecting pipe 401, a second airbag connecting pipe 402, a third airbag connecting pipe 403, a fourth airbag connecting pipe 404 and a fifth airbag connecting pipe 405. The air chamber solenoid valve 500 includes a first air chamber solenoid valve 501, a second air chamber solenoid valve 502, a third air chamber solenoid valve 503, a fourth air chamber solenoid valve 504 and a fifth air chamber solenoid valve 505.

The air pressure massager with the air pressure adjusting device can achieve the functions of pre-inflation for pressure maintaining, pressure maintaining massage, pressure equalization, pressure regulation, and automatic pressure relief in power failure. As the pressure maintaining channel 200 has a different inflation mode in two embodiments of the air pressure adjusting device, the pre-inflation for pressure maintaining is different, and the pressure maintaining massage, the pressure equalization, the pressure regulation, and the automatic pressure relief in power failure are consistent. Specific functions are described as follows:

### 1) Pre-inflation for pressure maintaining

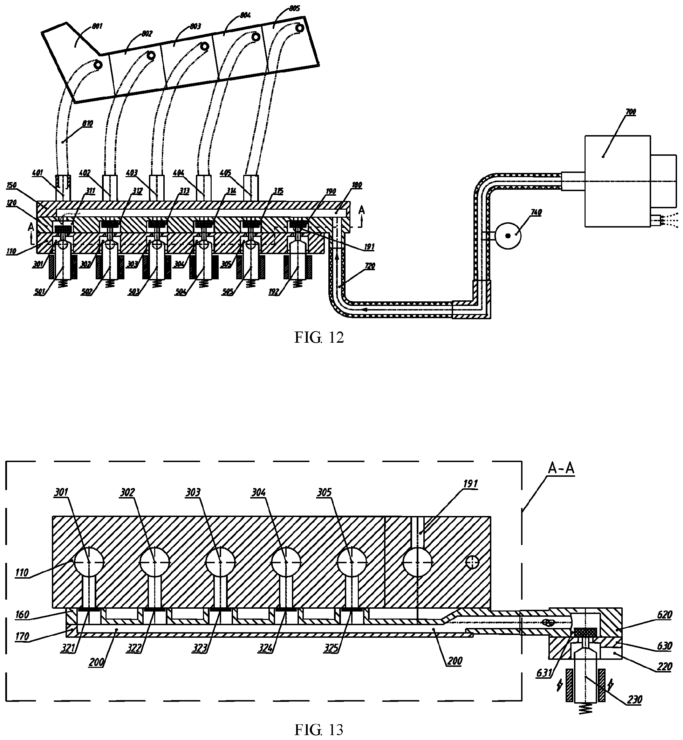

In the first embodiment of the air pressure adjusting device,
as shown in FIG. 12 and FIG. 13, the first air chamber solenoid valve 501 and the first exhaust solenoid valve 220 are powered on, while the second air chamber solenoid valve 502, the third air chamber solenoid valve 503, the fourth air chamber solenoid valve 504, the fifth air chamber solenoid valve 505 and the second exhaust solenoid valve 192 are all powered off.

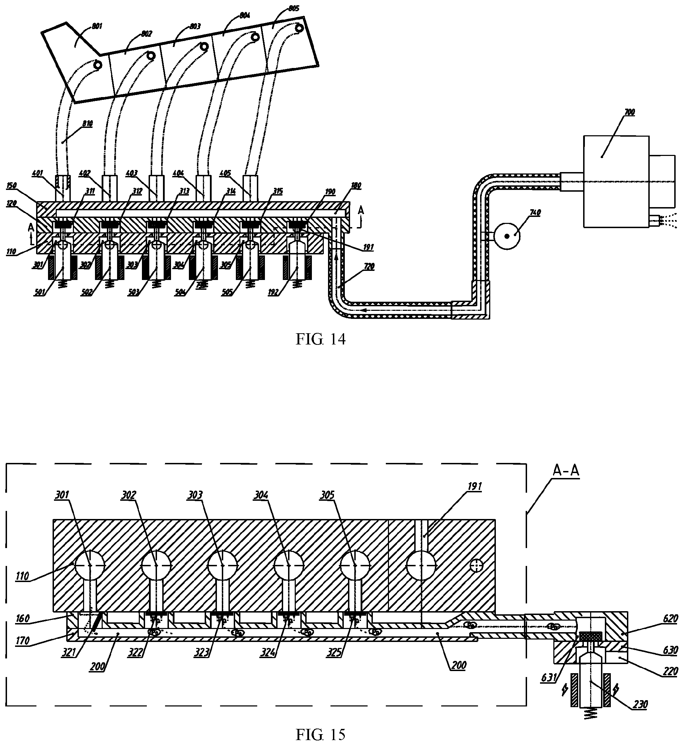

The air source 700 is started to inflate the air channel 180 through the second inflation channel 720. In this case, the air channel 180 is communicated with the first diversion chamber 311 isolated from the first three-way chamber 301. The air can only enter the first diversion chamber 311 and enter the first airbag 801 through the first airbag connecting pipe 401. After the first airbag 801 is inflated, as shown in FIG. 14 and FIG. 15, the air source 700 is closed, the first air chamber solenoid valve 501 is powered off, then the first diversion chamber 311 is isolated from the air channel 180, but is communicated with the first three-way chamber 301. The high-pressure air in the first airbag 801 flows into the first three-way chamber 310 and breaks through the first check valve 321 and enters the pressure maintaining channel 200. When the air pressure value of the pressure maintaining channel 200 is increased to the preset air pressure value Pa, the first air chamber solenoid valve 501 is powered on again to be opened, the first diversion chamber 311 is isolated from the first three-way chamber 301 again, and the high-pressure air in the pressure maintaining channel 200 breaks through the first check valve 321 for closure, and the pressure maintaining channel 200 forms a sealing channel for maintaining the air pressure Pa.

After the pressure maintaining channel 200 is inflated, the first check valve 321, the second check valve 322, the third check valve 323, the fourth check valve 324 and the fifth check valve 325 are all closed, and the air pressure value of the pressure maintaining channel 200 reaches the preset pressure value Pa. As long as the maximum inflation air pressure value Pb of the airbag 800 is lower than the air pressure value Pa of the pressure maintaining channel 200, each check valve 320 can be closed continuously based on the pressure difference. When the airbag 800 is subsequently inflated, the air in the inflated airbag can be prevented from flowing back even when each air chamber solenoid valve 500 is not powered on, thereby preventing air cross and reducing the energy consumption of each solenoid valve.

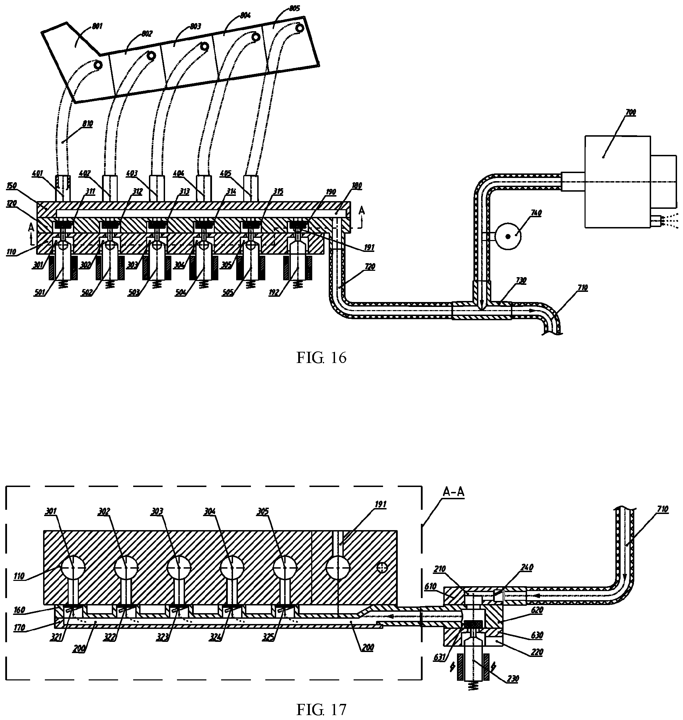

In the second embodiment of the air pressure adjusting device,
as shown in FIG. 16 and FIG. 17, the first air chamber solenoid valve 501, the second air chamber solenoid valve 502, the third air chamber solenoid valve 503, the fourth air chamber solenoid valve 504, the fifth air chamber solenoid valve 505 and the second exhaust solenoid valve 192 are all powered off. In this case, the first diversion chamber 311, the second diversion chamber 312, the third diversion chamber 313, the fourth diversion chamber 314, the fifth diversion chamber 315 and the second exhaust chamber 190 are all isolated from the air channel 180.

The first exhaust solenoid valve 230 is opened to start the air source 700. Because the corresponding diversion chamber 310 is closed by each air chamber solenoid valve 500, the air source 700 cannot inflate each airbag 800 through the diversion chamber 310. The air source 700 supplies air to the air pressure adjusting device through the first inflation channel 710. Since the first exhaust solenoid valve 230 is opened, the first exhaust chamber 631 is communicated with the air intake port 210 of the pressure maintaining channel and isolated from the first exhaust channel 220, and the air can break through the air intake check valve 240 and enters the first exhaust chamber 631 and then the pressure maintaining channel 200. Then, the air breaks through the check valves 320 respectively, and the check valves 320 are closed under pressure; because the pressure maintaining channel 200 and the three-way chamber 300 are isolated by the check valves 320, the air cannot circulate between them, and the pressure maintaining channel 200 is continuously inflated and pressurized. When the pressure sensor 740 monitors that the pressure value of the pressure maintaining channel 200 is increased to the preset pressure value Pa, the air source 700 stops air delivery. In this case, a pressure difference is obtained between two sides of the air intake check valve 240, the air intake check valve 240 is closed under pressure, the whole pressure maintaining channel 200 is sealed, and the air pressure in the pressure maintaining channel 200 remains unchanged at Pa.

Through the above process, the first check valve 321, the second check valve 322, the third check valve 323, the fourth check valve 324 and the fifth check valve 325 are all closed, and the air pressure value of the pressure maintaining channel 200 reaches the preset pressure value Pa. As long as the maximum inflation air pressure value Pb of the airbag 800 is lower than the air pressure value Pa of the pressure maintaining channel 200, each check valve 320 can be closed continuously based on the pressure difference. When the airbag 800 is subsequently inflated, the air in the inflated airbag can be prevented from flowing back even when each air chamber solenoid valve 500 is not powered on, thereby preventing air cross and reducing the energy consumption of each solenoid valve.

### 2) Pressure maintaining massage

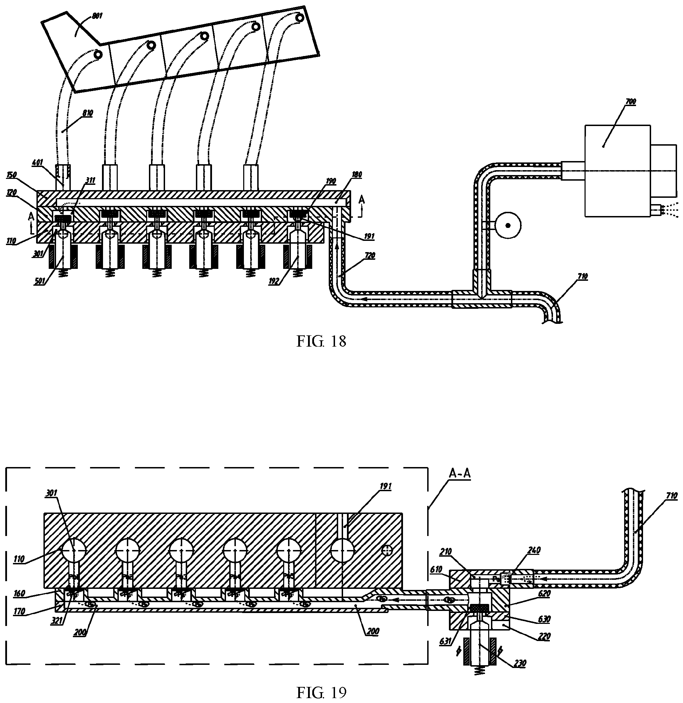

As shown in FIG. 18 and FIG. 19, the first exhaust solenoid valve 230 is powered on to maintain the pressure of the air pressure adjusting device, the first air chamber solenoid valve 501 is powered on, and the second air chamber solenoid valve 502, the third air chamber solenoid valve 503, the fourth air chamber solenoid valve 504, the fifth air chamber solenoid valve 505 and the second exhaust solenoid valve 192 are all powered on. The air source 700 is started to inflate the air channel 180 through the second inflation channel 720, and the air enters the first diversion chamber 311. Because the first air chamber solenoid valve 501 is opened, the first diversion chamber 311 and the first three-way chamber 301 are isolated from each other, the air can only enter the first airbag 801 through the first airbag connecting pipe 401 communicated with the first diversion chamber 311. When the pressure sensor 740 monitors that the air pressure value Pb1 of the first diversion chamber 311 reaches the maximum inflation air pressure value Pb of the airbag, the air source 700 stops inflation, the first air chamber solenoid valve 501 is powered off, the first diversion chamber 311 is isolated from the air channel 180, and the first airbag connecting pipe 401 is communicated with the first three-way chamber 301 through the first diversion chamber 311. However, since the air pressure value Pa of the pressure maintaining channel 200 is greater than the air pressure value Pb1 of the first diversion chamber 311, the first check valve 321 cannot be broken through, and the air in the first airbag 801 cannot flow, thus maintaining the pressure of the first airbag 801.

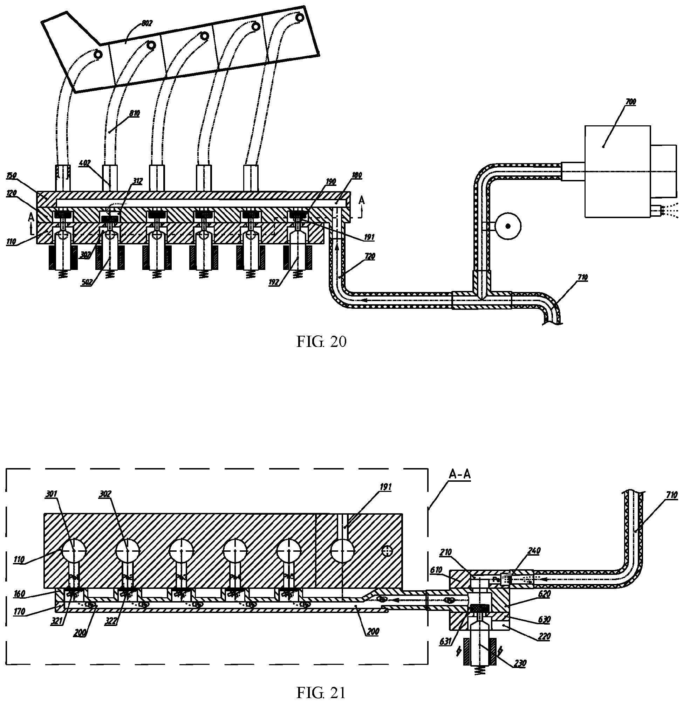

Similarly, as shown in FIG. 20 and FIG. 21, the second air chamber solenoid valve 502 is powered on, and the first air chamber solenoid valve 501, the third air chamber solenoid valve 503, the fourth air chamber solenoid valve 504, the fifth air chamber solenoid valve 505 and the second exhaust solenoid valve 192 are powered off. The air source 700 is started to inflate the second airbag 802. When the air pressure value Pb2 of the second diversion chamber 312 reaches the maximum inflation air pressure value Pb of the airbag, the air source 700 stops inflation, and the pressure of the second airbag 802 is maintained by the air pressure adjusting device.

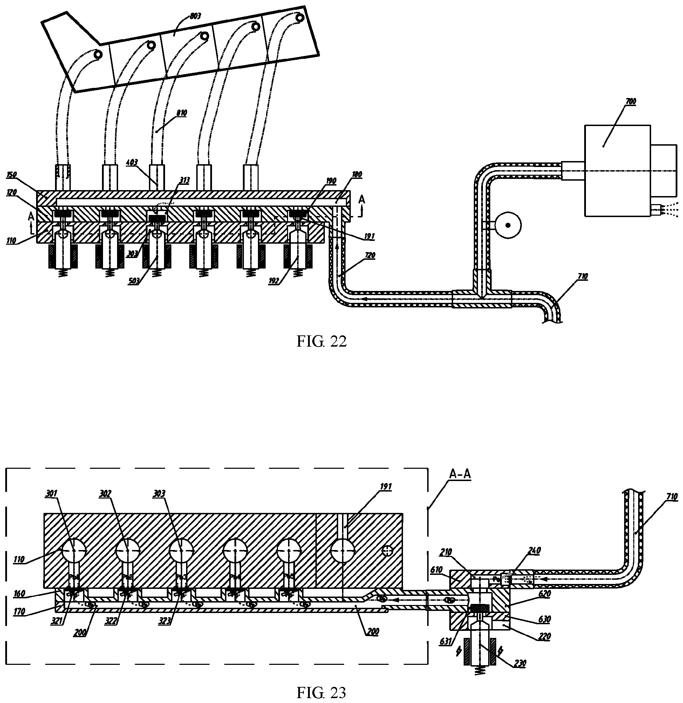

Similarly, as shown in FIG. 22 and FIG. 23, the third air chamber solenoid valve 503 is powered on, and the first air chamber solenoid valve 501, the second air chamber solenoid valve 502, the fourth air chamber solenoid valve 504, the fifth air chamber solenoid valve 505 and the second exhaust solenoid valve 192 are powered off. The air source 700 is started to inflate the third airbag 803. When the air pressure value Pb3 of the third diversion chamber 313 reaches the maximum inflation air pressure value Pb of the airbag, the air source 700 stops inflation, and the pressure of the third airbag 803 is maintained by the air pressure adjusting device.

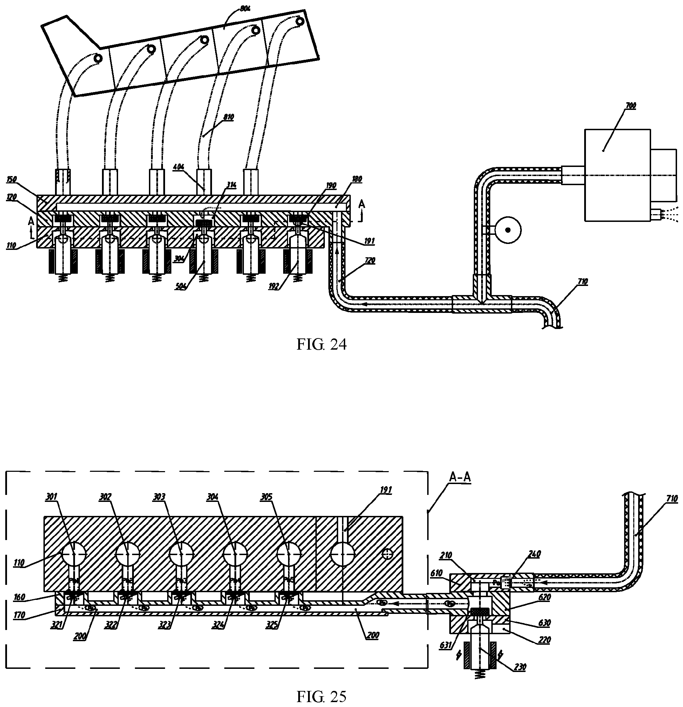

Similarly, as shown in FIG. 24 and FIG. 25, the fourth air chamber solenoid valve 504 is powered on, and the first air chamber solenoid valve 501, the second air chamber solenoid valve 502, the third air chamber solenoid valve 503, the fifth air chamber solenoid valve 505 and the second exhaust solenoid valve 192 are powered off. The air source 700 is started to inflate the fourth airbag 804. When the air pressure value Pb4 of the fourth diversion chamber 314 reaches the maximum inflation air pressure value Pb of the airbag, the air source 700 stops inflation, and the pressure of the fourth airbag 804 is maintained by the air pressure adjusting device.

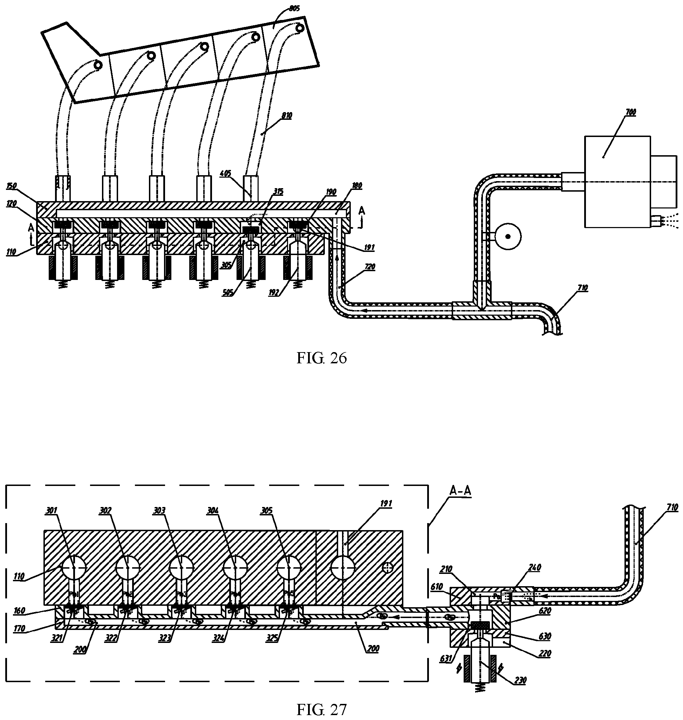

Similarly, as shown in FIG. 26 and FIG. 27, the fifth air chamber solenoid valve 505 is powered on, and the first air chamber solenoid valve 501, the second air chamber solenoid valve 502, the third air chamber solenoid valve 503, the fourth air chamber solenoid valve 504 and the second exhaust solenoid valve 192 are powered off. The air source 700 is started to inflate the fifth airbag 805. When the air pressure value Pb5 of the fifth diversion chamber 315 reaches the maximum inflation air pressure value Pb of the airbag, the air source 700 stops inflation, and the pressure of the fifth airbag 805 is maintained by the air pressure adjusting device.

When all the airbags 800 are inflated, all the air chamber solenoid valves 500 are powered off, and the power consumption of the solenoid valves is minimized. After the inflation, the limbs and muscle tissues can be pressed and massaged by the airbag 800.

In addition, different amounts of air can be inflated into different airbags 800 so that the air pressure values of the airbags 800 are not equal, that is, Pb1≠Pb2≠Pb3≠Pb4≠Pb5. As long as the air pressure values of the airbags 800 are lower than the maintaining pressure value Pa of the pressure maintaining channel 200, the pressure maintaining state can be kept consistently. Therefore, each airbag 800 can have different inflation degrees, and can press different massage parts with different strengths, thus bringing better massage experience to users.

### 3) Pressure equalization and pressure regulation

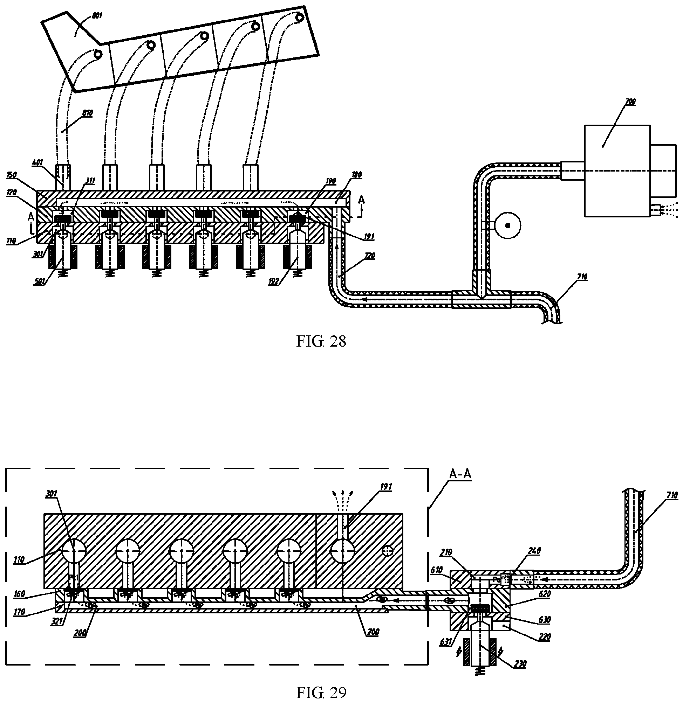

As shown in FIG. 28 and FIG. 29, the first exhaust solenoid valve 230 is powered on to maintain the pressure of the air pressure adjusting device, and the air source 700 stops inflation. The first air chamber solenoid valve 501 and the second exhaust solenoid valve 192 are powered on, while the second air chamber solenoid valve 502, the third air chamber solenoid valve 503, the fourth air chamber solenoid valve 504 and the fifth air chamber solenoid valve 505 are all powered off. In this case, because the first air chamber solenoid valve 501 is opened, the air in the first airbag 801 can enter the first diversion chamber 311 through the first airbag connecting pipe 401. Because the first diversion chamber 311 is isolated from the first three-way chamber 301, the first diversion chamber 311 is communicated with the air channel 180, and the air entering the first diversion chamber 311 can only enter the air channel 180. When the air flows in the air channel 180, because all the other air chamber solenoid valves 500 excluding the first air chamber solenoid valve 501 are powered off, the second exhaust solenoid valve 192 is powered on, the air cannot enter other diversion chambers 310, but can only enter the second exhaust chamber 190 communicated with the air channel 180, and then can be exhausted through the second exhaust channel 191, and the air pressure in the first airbag 801 is reduced. When the pressure sensor 741 monitors that the air pressure value of the first airbag 801 is reduced to the required air pressure value Pc1, the second exhaust solenoid valve 192 is powered off, and the air in the first airbag 801 stops deflation and pressure relief. Through the above steps, the air pressure value of the first airbag 801 can be adjusted independently.

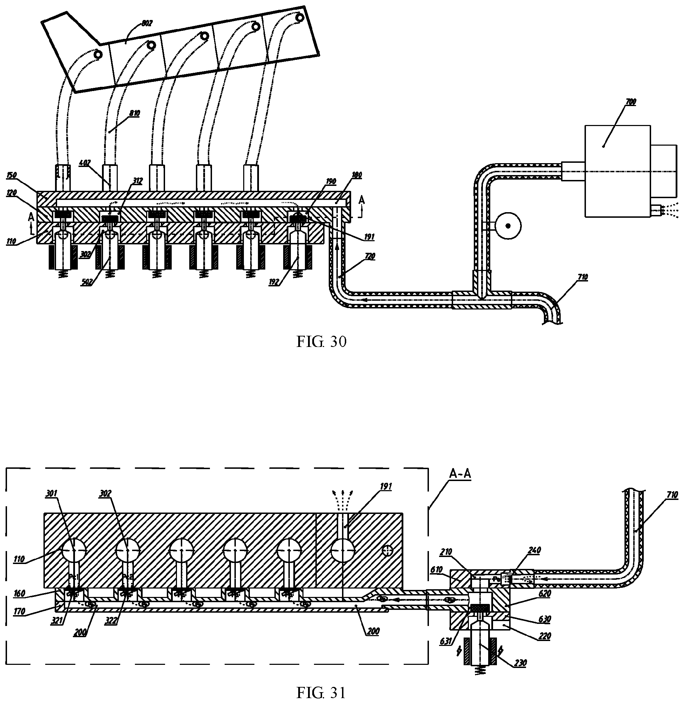

Similarly, as shown in FIG. 30 and FIG. 31, the first exhaust solenoid valve 230 is powered on to maintain the pressure of the air pressure adjusting device, and the air source 700 stops inflation. The second air chamber solenoid valve 502 and the second exhaust solenoid valve 192 are powered on, while the first air chamber solenoid valve 501, the third air chamber solenoid valve 503, the fourth air chamber solenoid valve 504 and the fifth air chamber solenoid valve 505 are all powered off. The air in the second airbag 802 enters the second exhaust chamber 190 and is exhausted through the second exhaust channel 191, and then the air pressure in the second airbag 802 is reduced. When the pressure sensor 741 monitors that the air pressure value of the second airbag 802 is reduced to the required air pressure value Pc2, the second exhaust solenoid valve 192 is powered off, and the air in the second airbag 802 stops deflation and pressure relief. Through the above steps, the air pressure value of the second airbag 802 can be adjusted independently.

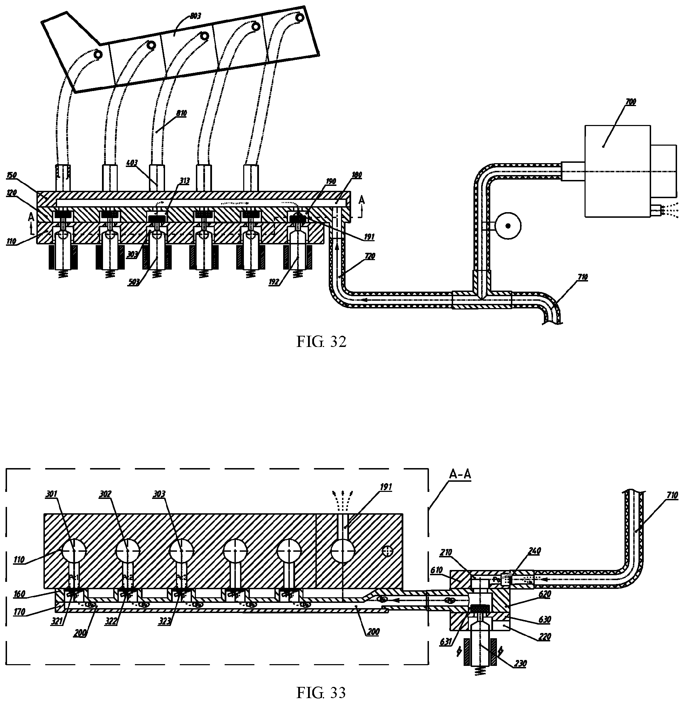

Similarly, as shown in FIG. 32 and FIG. 33, the first exhaust solenoid valve 230 is powered on to maintain the pressure of the air pressure adjusting device, and the air source 700 stops inflation. The third air chamber solenoid valve 503 and the second exhaust solenoid valve 192 are powered on, while the first air chamber solenoid valve 501, the second air chamber solenoid valve 502, the fourth air chamber solenoid valve 504 and the fifth air chamber solenoid valve 505 are all powered off. The air in the third airbag 803 enters the second exhaust chamber 190 and is exhausted through the second exhaust channel 191, and then the air pressure in the third airbag 803 is reduced. When the pressure sensor 741 monitors that the air pressure value of the second airbag 803 is reduced to the required air pressure Pc3, the second exhaust solenoid valve 192 is powered off, and the air in the third airbag 803 stops deflation and pressure relief. Through the above steps, the air pressure value of the third airbag 803 can be adjusted independently.

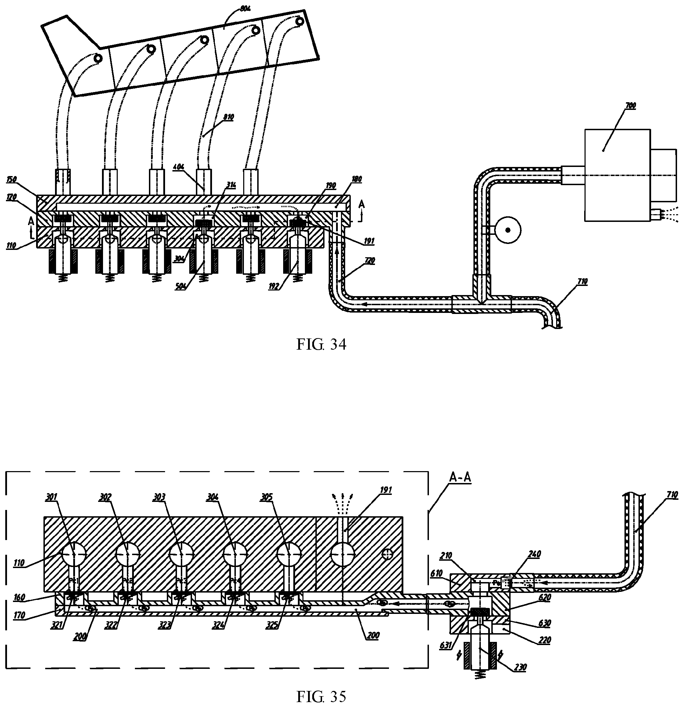

Similarly, as shown in FIG. 34 and FIG. 35, the first exhaust solenoid valve 230 is powered on to maintain the pressure of the air pressure adjusting device, and the air source 700 stops inflation. The fourth air chamber solenoid valve 504 and the second exhaust solenoid valve 192 are powered on, while the first air chamber solenoid valve 501, the second air chamber solenoid valve 502, the third air chamber solenoid valve 503 and the fifth air chamber solenoid valve 505 are all powered off. The air in the fourth airbag 804 enters the second exhaust chamber 190 and is exhausted through the second exhaust channel 191, and then the air pressure in the fourth airbag 804 is reduced. When the pressure sensor 741 monitors that the air pressure value of the fourth airbag 804 is reduced to the required air pressure value Pc4, the second exhaust solenoid valve 192 is powered off, and the air in the fourth airbag 804 stops deflation and pressure relief. Through the above steps, the air pressure value of the fourth airbag 804 can be adjusted independently.

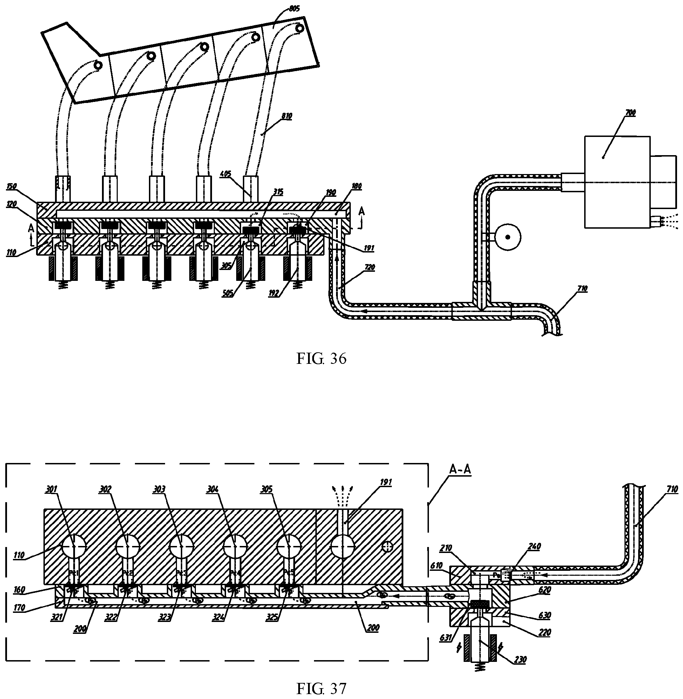

Similarly, as shown in FIG. 36 and FIG. 37, the first exhaust solenoid valve 230 is powered on to maintain the pressure of the air pressure adjusting device, and the air source 700 stops inflation. The fifth air chamber solenoid valve 505 and the second exhaust solenoid valve 192 are powered on, while the first air chamber solenoid valve 501, the second air chamber solenoid valve 502, the third air chamber solenoid valve 503 and the fourth air chamber solenoid valve 504 are all powered off. The air in the fifth airbag 805 enters the second exhaust chamber 190 and is exhausted through the second exhaust channel 191, and then the air pressure in the fifth airbag 805 is reduced. When the pressure sensor 741 monitors that the air pressure value of the fifth airbag 805 is reduced to the required air pressure value Pc5, the second exhaust solenoid valve 192 is powered off, and the air in the fifth airbag 805 stops deflation and pressure relief. Through the above steps, the air pressure of the fifth airbag 805 can be adjusted independently.

In addition, all airbags 800 can be subjected to deflation and pressure relief to make all airbags 800 have a same air pressure value, namely, Pb1=Pb2=Pb3=Pb4=Pb5, so the pressure equalization effect can be achieved.

### 4) Automatic pressure relief in power failure

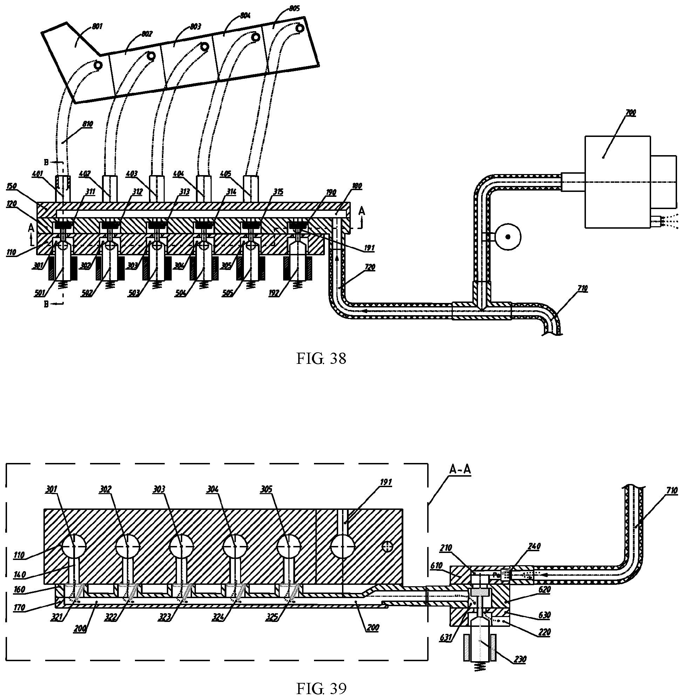

As shown in FIG. 38 and FIG. 39, all solenoid valves, including the first air chamber solenoid valve 501, the second air chamber solenoid valve 502, the third air chamber solenoid valve 503, the fourth air chamber solenoid valve 504, the fifth air chamber solenoid valve 505, the first exhaust solenoid valve 230 and the second exhaust solenoid valve 192, are powered off, and the air source 700 is also powered off to stop inflation. In this case, the pressure maintaining channel 200 is communicated with the first exhaust chamber 631, and the pressure maintaining channel 200 is no longer closed. When the air in the pressure maintaining channel 200 is exhausted through the first exhaust channel 230, the air pressure in the pressure maintaining channel 200 is reduced. When the air pressure value of the pressure maintaining channel 200 is reduced to be lower than that of the three-way chamber 300, each check valve 320 is broken through, and the air in each airbag 800 enters the exhaust channel 200 through the corresponding check valve 320 and is finally exhausted through the first exhaust channel 230, thereby achieving the pressure relief of all airbags 800. Through the function of automatic pressure relief in power failure of the air pressure massager, after the air pressure massager is powered off due to faults, all airbags 800 deflate and relieve pressure, thus ensuring that the airbags 800 will not always squeeze the limbs of the user, effectively improving the safety of the user in the user of the air pressure massager.

Further, the above four actions can be combined through different control logics, for example, pressure maintaining massage, pressure equalization and pressure regulation can be implemented in various massage modes to achieve the effects of pressure equalization, adjustable air pressure of single chamber and low power consumption. The pressure maintaining effect can be achieved through combination of pre-inflation for pressure maintaining and pressure maintaining message. Through combination of the above four actions, the product experience of the air pressure massager can be effectively improved, so that the air pressure massager can be more widely used and applicable to more people.

## Claims

1. An air pressure adjusting device, comprising a base (100), wherein a pressure maintaining channel (200) and a plurality of three-way chambers (300) are arranged in the base (100), each of the three-way chambers (300) is communicated with an openable and closable diversion chamber (310), and the diversion chamber (310) is communicated with an airbag connecting pipe (400); ports of the three-way chambers (300) that are not communicated with the diversion chamber (310) are communicated with the pressure maintaining channel (200); a check valve (320) is arranged between the three-way chambers (300) and the pressure maintaining channel (200) and is opened in the direction from the three-way chambers (300) to the pressure maintaining channel (200); and the pressure maintaining channel (200) is further communicated with an air intake port (210) of the openable and closable pressure maintaining channel and a first openable and closable exhaust channel (220).

2. The air pressure adjusting device according to claim 1, wherein a first exhaust solenoid valve (230) and an air chamber solenoid valve (500) in one-to-one correspondence to the three-way chambers (300) are arranged on the base (100); the first exhaust solenoid valve (230) is configured to control opening and closing of the first exhaust channel (220); and the air chamber solenoid valve (500) is configured to control opening and closing of the diversion chamber (310) communicated with the corresponding three-way chamber (300).

3. The air pressure adjusting device according to claim 2, wherein the base (100) comprises an intermediate frame (120) and a lower base (110), the plurality of three-way chambers (300) are spaced apart inside the lower base (110) in the length direction of the lower base (110), a plurality of diversion chambers (310) are spaced apart inside the intermediate frame (120) in the length direction of the intermediate frame (120), and the diversion chambers (310) are located above the corresponding three-way chambers (300); the air chamber solenoid valve (500) is secured to the bottom of the lower base (110); the piston end of the air chamber solenoid valve (500) passes through the corresponding three-way chambers (300) and extends into the diversion chambers (310) located above the three-way chambers; the piston end of the air chamber solenoid valve (500) is in sealing fit with all connections of the diversion chambers (310); the intermediate frame (120) is detachably connected to the top of the lower base (110); and the intermediate frame (120) is provided with an intake and exhaust channel (130) communicated between the diversion chamber (310) and the airbag connecting pipe (400).

4. The air pressure adjusting device according to claim 3, wherein the lower base (110) is further internally provided with an exhaust channel (140) in one-to-one correspondence to the three-way chambers (300), and the exhaust channel (140) is communicated between the pressure maintaining channel (200) and the corresponding three-way chambers (300); the check valve (320) is arranged at the connection between the exhaust channel (140) and the pressure maintaining channel (200), and the check valve (320) is opened in the direction from the exhaust channel (140) to the pressure maintaining channel (200).

5. The air pressure adjusting device according to claim 3, wherein the base (100) further comprises a check valve fixing plate (160), the check valve fixing plate (160) is detachably connected to the side surface of the lower base (110), the check valve fixing plate (160) is provided with a first mounting half chamber (161) in one-to-one correspondence to a check valve (320), the lower base (110) is provided with a second mounting half chamber (162) in one-to-one correspondence to the check valve (320), the second mounting half chamber (162) is communicated with the corresponding three-way chambers (300), and the first mounting half chamber (161) and the second mounting half chamber (162) are butted to form a chamber for accommodating the corresponding check valve (320).

6. The air pressure adjusting device according to claim 5, wherein the base (100) further comprises a sealing side cover plate (170), the check valve fixing plate (160) is provided with a pressure maintaining channel groove (163) extending along the length direction of the check valve fixing plate (160), the pressure maintaining channel groove (163) is communicated with each first mounting half chamber (161), the sealing side cover plate (170) is detachably connected to the surface of the check valve fixing plate (160) not connected with the lower base (110), and the sealing side cover plate (170) covers the pressure maintaining channel groove (163) and is in sealing fit with the pressure maintaining channel groove (163) to form the pressure maintaining channel (200).

7. The air pressure adjusting device according to claim 3, wherein the base (100) is further provided with an air channel (180) and a second openable and closable exhaust chamber (190); the air channel (180) is provided with an air intake port of the air channel and communicated with the diversion chamber (310) of each three-way chamber (300); the second exhaust chamber (190) is communicated with the air channel (180); and a second exhaust channel (191) is communicated with the second exhaust chamber (190) at the place not communicated with the air channel (180).

8. The air pressure adjusting device according to claim 7, further comprising a second exhaust solenoid valve (192) that is configured to control opening and closing of the second exhaust chamber (190); the second exhaust solenoid valve (192) is secured to the bottom of the lower base (110); and the piston end of the second exhaust solenoid valve (192) extends into the second exhaust chamber (190) and is in sealing fit with connections of the second exhaust chamber (190).

9. The air pressure adjusting device according to claim 7, wherein the base (100) further comprises an upper cover (150), wherein one surface of the upper cover (150) is provided with an air channel groove extending along the length direction of the upper cover (150), and the upper cover (150) is detachably connected to the intermediate frame (120) and the air channel groove is communicated with the second exhaust chamber (190) and the diversion chamber (310) of each three-way chamber (300), and the side of the intermediate frame (120) connected with the upper cover (150) is in sealing fit with the air channel groove to form the air channel (180).

10. The air pressure adjusting device according to claim 9, wherein the base (100) further comprises a base extension portion (600) comprising an intermediate frame extension portion (620) and a lower base extension portion (630); the intermediate frame extension portion (620) is detachably connected to the lower base extension portion (630); the base extension portion (600) is secured to one end of the base (100); the first exhaust channel (220) is arranged on the lower base extension portion (630); the intermediate frame extension portion (620) is internally provided with a first exhaust chamber (631) that is communicated with the pressure maintaining channel (200) and the first exhaust channel (220); and the first exhaust chamber (631) extends from the pressure maintaining channel (200) to the intermediate frame extension portion (620).

11. The air pressure adjusting device according to claim 10, wherein the first exhaust solenoid valve (230) is secured to the bottom of the lower base extension portion (630), and the piston end of the first exhaust solenoid valve (230) extends into the first exhaust chamber (631) and is in a sealing fit with connections of the first exhaust chamber (631).

12. The air pressure adjusting device according to claim 10, wherein the base extension portion (600) further comprises an upper cover extension portion (610) detachably connected to the intermediate frame extension portion (620), the air intake port (210) of the pressure maintaining channel is arranged on the upper cover extension portion (610), and the air intake port (210) of the pressure maintaining channel is communicated with the first exhaust chamber (631).

13. The air pressure adjusting device according to claim 12, further comprising an air intake check valve (240) arranged at the air intake port (210) of the pressure maintaining channel; the air intake check valve (240) is configured to control opening and closing of the air intake port (210) of the pressure maintaining channel, and is opened in the direction from the outside of the air intake port (210) of the pressure maintaining channel to the first exhaust chamber (631).

14. The air pressure adjusting device according to claim 11, wherein the first exhaust solenoid valve (230), the second exhaust solenoid valve (192) and the air chamber solenoid valve (500) are normally closed solenoid valves.

15. An air pressure massager, comprising an air source (700) and a plurality of airbags (800) communicated with the air source (700), and further comprising the air pressure adjusting device according to claim 1, wherein a three-way chamber (300) on the air pressure adjusting device is in one-to-one correspondence to the airbags (800), and each of the airbags (800) is communicated with a corresponding airbag connecting pipe (400) on the air pressure adjusting device; and the air source (700) is communicated with a diversion chamber (310) on each three-way chamber (300) in the air pressure adjusting device through a second inflation channel (720).

16. The air pressure massager according to claim 15, wherein the air source (700) is communicated with an air intake port (210) of a pressure maintaining channel through a first inflation channel (710).

17. A method for controlling an air pressure massager, wherein the air pressure massager according to claim 16 is used; when an air intake port of a pressure maintaining channel is closed, the pressure maintaining channel is inflated by an airbag; the pressure maintaining channel, a three-way chamber and a diversion chamber are selectively opened or closed to implement any one action of pre-inflation for pressure maintaining, massage under pressure maintaining, pressure equalization, pressure regulation, and automatic pressure relief in power failure, or a combination of two actions thereof; when the air intake port of the pressure maintaining channel is opened and is communicated with an air source, the pressure maintaining channel, the three-way chamber and the diversion chamber are selectively opened or closed to implement any one action of pre-inflation for pressure maintaining, massage under pressure maintaining, pressure equalization, pressure regulation, and automatic pressure relief in power failure of the air pressure massager, or a combination of two actions thereof.

18. The method for controlling an air pressure massager according to claim17, wherein when the air intake port of the pressure maintaining channel is closed, any airbag is inflated by the air source in the action of pre-inflation for pressure maintaining, and after the airbag is inflated, air in the airbag breaks through the check valve in the corresponding three-way chamber and enters the pressure maintaining channel to inflate the pressure maintaining channel, and a pressure in the pressure maintaining channel is increased to close the check valve to seal the pressure maintaining channel and keep the air pressure therein unchanged; when the air intake port of the pressure maintaining channel is opened and communicated with the air source, in the action of pre-inflation for pressure maintaining, the air source directly inflates the pressure maintaining channel in the air pressure adjusting device, and the pressure in the pressure maintaining channel is increased to seal the pressure maintaining channel to keep the air pressure therein unchanged.

19. The method for controlling an air pressure massager according to claim 17, wherein in the action of massage under pressure maintaining, the action of pre-inflation forpressure maintaining is firstly performed so that the pressure maintaining channel is kept sealed, each airbag is separately inflated by the air source, and the air pressure in each airbag is kept unchanged through the pressure maintaining channel.

20. The method for controlling an air pressure massager according to claim 17, wherein in the action of pressure equalization and pressure regulation, the action of pre-inflation for pressure maintaining is firstly performed so that the pressure maintaining channel is kept sealed, and the air pressure in each airbag is respectively changed by independently deflating the inflated airbag.

21. The method for controlling an air pressure massager according to claim 17, wherein in the action of automatic pressure relief in power failure, the pressure maintaining channel is automatically opened after the solenoid valves are all powered off, and each airbag is deflated and exhausted through the pressure maintaining channel.
